# EUROPEAN PATENT APPLICATION

(11) **EP 2 647 639 A1**
(43) Date of publication of application: **09.10.2013**
(21) Application number: 12163500.7
(22) Date of filing: 06.04.2012
(51) Int. Cl.: C07F 5/02

(54) **ß-boration of alkene and alkyne intermediates**

(71) Applicant: LEK Pharmaceuticals d.d., 1526 Ljubljana (SI)
(72) Inventor: The designation of the inventor has not yet been filed
(74) Representative: Kunic Tesovic, Barbara

(57) **Abstract**

The present invention relates to the field of organic chemistry, and in particular to the preparation of β-borated compounds. These β-borated compounds can be used as intermediates in the synthesis of pharmaceutically active agents such as Sitagliptin.

## Description

### Field of the invention

The present invention relates to the field of organic chemistry, and in particular to the preparation of β-borated compounds. β-boated compounds can be used as intermediates in the synthesis of pharmaceutically active agents such as sitagliptin.

### Background prior art

The formation of a carbon-boron (C-B) bond plays an important role in synthetic chemistry. Organoboranes are highly versatile precursors for the preparation of various organic compounds including active pharmaceutical ingredients such as sitagliptin. It is possible to transform a boronate group into another useful functional group with retention of configuration via different stoichiometric and catalytic reactions. It is known that C-B bond can be respectively converted to C-O bond by oxidation, C-N bond by amination, C-C bond via cross-coupling reactions and using fluorination to C-F bond formation.

More recently, several transition-metal catalysed process providing β-borated compounds have been presented. In particular, β-boration of α,β-unsaturated compounds catalyzed by different metals has received increasing attention driven especially by high synthetic potential and versatility of β-borated organoboron compounds. The transition metals Pt (Lawson, J. G.; et. al. Chem. Commun. 1997, 2051.), Rh (Shiomi, T.; et. al. Chem. Commun. 2009, 5987.), Pd (Lillo, V.; et. al. Org. Biomol. Chem. 2009, 7, 4674.), Ni (Hirano, K.; et. al. Org. Lett. 2007, 9, 5031.) promote β-boration reaction. Cu and Fe (Bonet, A.; et. al. Chem. Asian. J. 2011, 6, 1011.) also promote β-boration reaction and emerged as desirable alternative to hazardous, toxic and expensive metal catalysts such as Pt, Rh and Ni.

Prior art demonstrated that an equimolar combination of Cu(OTf) and Ph₃P catalyzed β-boration of specific acyclic and cyclic α,β-unsaturated ketones (Ito, H.; et. al. Tetrahedron Lett. 2000, 41, 6821). Similarly, Cu-based conjugative addition of bis(pinacolato)diboron to α,β-unsaturated ketones, esters and nitriles in mandatory presence of an additive such as LiCl was described in the prior art (Takahashi, K.; et. al. Chem. Lett. 2000, 29, 982.). Some special chiral-diamine copper complexes based on Cu(CH₃CN)₄PF₆ in the presence of a base activator being crucial for efficiency of the process were also demonstrated (Chen, I.-H.; et. al. Org. Lett. 2010, 12, 4098).

Typically, catalytic systems based on a catalyst comprising a transition metal compound of CuCl in combination with diphosphine ligands in the presence of stoichiometric or catalytic amount of appropriate base (K₂CO₃, NaO*t*-Bu, KOH, etc.) are used for β-boration of variety of α,β-unsaturated compounds as shown in Scheme 1 (Mun, S.; et. al. Org. Lett. 2006, 8, 4887; Feng, X.; et. al. Chem. Commun. 2009, 6577; O'Brien, J. M.; et. al. J. Am. Chem. Soc. 2010, 132, 10630; Lee, J.-E; et. al. Angew. Chem. Int. Ed. 2008, 47, 145). Very recently, β-boration of α,β-unsaturated ketones in the presence of catalytic amount of Cs₂CO₃/ phosphine ligand and protic additives was also demonstrated (Bonet. A.; et. al. Angew. Chem. Int. Ed. 2010, 49, 5130.).

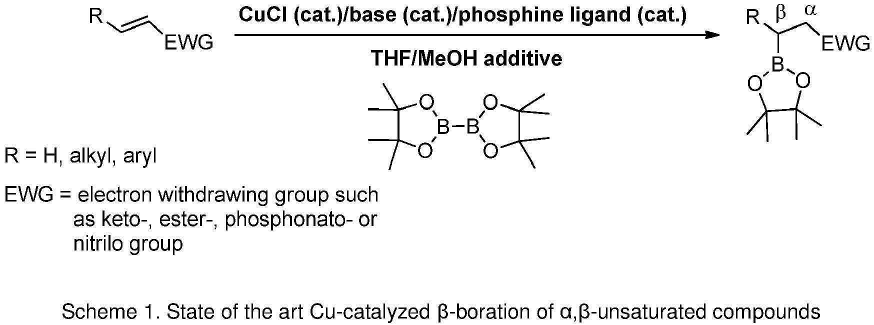

Recently, H. Chea et. al., Bull. Korean Chem. Soc. 2010, Vol. 31, No. 3, 551 disclosed a ligandless copper-catalyzed ß-boration of α,β-unsaturated compounds in THF as solvent and in the presence of water as an additive (THF: H₂O = 2 : 1). In this catalytic ß-boration reaction, a combination of Cu(Cl) and NaOt-Bu or alternatively, copper oxides CuO and Cu₂O in the presence of base are applied as catalyst.

However, the state of the art catalytic systems have the following limitations: a) additional stoichiometric or catalytic activators, usually base additives, are needed for efficiency of the process; b) β-boration, especially asymmetric version, is always performed in the presence of organic solvents such as THF, toluene, DMF, and final products are isolated also using volatile, toxic organic solvents; c) usually, also protic additives like MeOH, i-PrOH, EtOH are added for high efficiency and enhancement of the reaction; d) high catalyst loadings and in some cases special catalysts and ligands are used; e) some of the state of the art catalytic systems are substrate specific and thus provide for a narrow substrate scope only.

### Object of invention

Therefore, the object of the present invention is to provide an improved process for the preparation of β-borated compounds. In addition, the object of the present invention is to develop a simple and environmentally benign process.

### Summary of the Invention

Various aspects, advantageous features and preferred embodiments of the present invention as summarized in the following items, respectively alone or in combination, contribute to solving the object of the invention.
(1) A process for preparation of a compound of formula II, 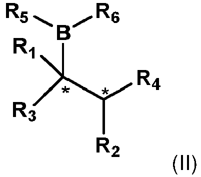 wherein R₁, R₃ and R₄ are independently from each other selected from the group consisting of
   (i) hydrogen (H),
   (ii) substituted or unsubstituted C1-C12 alkyl,
   (iii) substituted or unsubstituted C6-C24 aryl ,
   (iv) substituted or unsubstituted C7-C24 alkylaryl
   R₂ is independently selected from the group consisting of
   (i') substituted or unsubstituted C1-C12 alkyl,
   (ii') substituted or unsubstituted C6-C24 aryl,
   (iii') substituted or unsubstituted C7-C24 alkylaryl
   (iv') formyl (-CO-H),
   (v') oxoalkyl, oxoaryl, oxoalkylaryl (-CO-alkyl, -CO-aryl, -CO-alkylaryl), wherein alkyl, aryl and alkylaryl are defined as in items (i'), (ii') and (iii') above,
   (vi') alkyloxycarbonyl (-CO-O-alkyl), aryloxycarbonyl (-CO-O-aryl), alkylaryloxycarbonyl (-CO-O-alkylaryl) or vinyloxycarbonyl (-CO-O-CH=CH₂), wherein alkyl, aryl and alkylaryl are defined as in items (i'), (ii') and (iii') above,
   (vii') N-unsubstituted carbamoyl (-CO-NH₂) or N-substituted carbamoyl (-CO-NR'R") in which R' and R" independently from each other represent alkyl, aryl or alkylaryl as defined as in items (i'), (ii') and (iii') above,
   (viii') cyano (-CN),
   (ix') alkylsulfonyl (-SO₂-alkyl), arylsulfonyl (-SO₂-aryl) or alkylarylsulfonyl (-SO₂-alkylaryl),
      wherein alkyl, aryl and alkylaryl are defined as in items (i'), (ii') and (iii') above, preferably R₂ is selected from any one of structural characteristics (iv') to (ix'),
   or R₂ together with either R₃ or R₄ forms a 5 to 8 membered monocyclic ring, preferably a 5 to 6 membered ring, optionally including within said monocyclic ring any one of structural characteristics (v'), (vi') and (vii'),
   R₅ and R₆ are independently from each other selected from the group consisting of
   (i") substituted or unsubstituted C1-C12 alkyl or alkoxy,
   (ii") substituted or unsubstituted C6-C14 aryl or aryloxy,
   (iii") halogeno, and
   or R₅ and R₆ together form a chiral or non-chiral 5 to 10, particularly 5 to 6 membered mono or bicyclic ring, wherein the ring is optionally substituted at least one position with C1-C12 alkyl and/or C6-C14 aryl;
   the process comprising the steps of:
   (a) providing a compound of formula I, 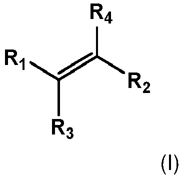 wherein R₁, R₂, R₃ and R₄ are defined as above, and
   (b) reacting the compound of formula I with a boronating agent having the formula H-BR₅R₆ or R₆R₅B-B-R₅R₆, wherein R₅ and R₆ are defined as above, in the presence of water as solvent and a catalyst system comprising copper in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻), acetate (OAc⁻), tert-butoxide (Ot-Bu⁻) and/or O²⁻ (oxide),
      wherein the reaction mixture is free or essentially free of organic solvent(s).

The designation "*" in the structural formula of compound of formula II indicates a chiral center.

The term "chiral center" as used herein means a tetrahedral carbon atom having four different substituents attached thereto.

The term "alkyl" as used herein means straight, branched or cyclic hydrocarbons.

The term "aryl" as used herein means hydrocarbon aryls, preferably single or condensed six-membered rings, more preferably phenyl or naphthyl, in particular phenyl.

The term "alkylaryl" as used herein means that the aforementioned aryl moieties are incorporated into the aforementioned straight or branched alkyl moieties either at one of the proximal or distal ends of the alkyl chain or between the aforementioned alkyl chains. For example, proximal end means for R₂ adjacent to an oxo, oxycarbonyl, N-substituted carbamoyl or sulfonyl functional group located at the C-C double bond of compound of formula I, while distal means the terminal carbon of the alkyl moiety which is furthermost from said functional group. Preferably, in the alkylaryl moiety, the aryl moiety is located at the distal end of the alkyl moiety.

The term "substituted" as employed herein in connection with R₁, R₂, R₃ and R₄ means that the alkyl, aryl and alkylaryl groups have at least one C₁-C₆ alkoxy substituent and/or at least on halogen substituent selected from the group consisting of F, Cl, Br and I. As regards the halogen substituent, preferably, aryl or the aryl residue of alkylaryl is substituted with at least one halogen selected from the group consisting of F, Cl, Br and I, and/or alkyl or the alkyl residue of alkylaryl is substituted with at least one fluoro (F) substituent. In connection with R₅ and R₆, the term "substituted" means that alkyl or alkoxy substituents are substituted with at least one C6-C14 aryl, preferably C6-C10 aryl, more preferably phenyl, and aryl substituents are substituted with at least one C1-C12 alkyl, preferably C1-C6, more preferably C1-C3.

The term "catalyst system" as used herein means a combination of metal catalyst and base activator. Preferably, the catalyst system is provided in the form of a salt consisting of the metal catalyst as cation and the base activator as anion, or the aforementioned salt is formed in situ. More preferably, the catalyst system is provided in the form of a salt. Even more preferably, the catalyst system is one compound.

The anion or oxide comprised in the catalytic system acts as a "base activator". The term "base activator" as used herein means a chemical component/compound which provides for a pH-value higher than 7.0. Hence, in order to provide for the aforementioned pH-value, the anion or oxide is applied in the form of a salt and not in the form of a proton-acid.

The term "free of organic solvents" means that organic solvent(s) is/are completely absent in the reaction mixture or present in trace amounts only. The term "essentially free of organic solvents" means that organic solvents may be present in the reaction mixture in an amount of up to about 10 percent by volume of the volume (vol%) of the total volume of solvent(s) (i.e. organic solvent(s) and water), preferably up to about 6 vol%, more preferably up to about 4 vol%, and in particular up to about 2 vol% at maximum. The aforementioned minimum amounts of organic solvent(s) may be added to the reaction mixture in case the α,β-unsaturated substrate is only sparingly or even poorly soluble in water, in order to provide for an improved dissolution of the substrate in the reaction mixture. In case organic solvent(s) is/are applied, it/they would be selected from solvents which are both water-miscible and compatible with boration reaction, such as methanol, ethanol, isopropanol, tetrahydrofurane (THF) or dimethylformamide (DMF). However, according to the present inventive concept, it is most preferred to dispense with organic solvent(s) in the reaction mixture, but rather to carry out the β-boration reaction by applying water as the only solvent present in the reaction mixture.

The term "organic solvent" as used herein means an organic compound containing carbon, hydrogen and optionally heteroatoms such as oxygen and sulfur, which organic compound has a molecular weight of about 30 to 200 g/mol and is substantially liquid at an ambient temperature of about 10 to 30 °C. Organic solvents typically applied in state of the art boronation reactions are halogenated alkanes such as methylene chloride and chloroform, lower alcohols such as methanol, ethanol or isopropanol, ethers such as tetrahydrofurane (THF) and diethylether, alkanes such as pentane or hexane or polar hydrophilic aprotic solvents such as dimethylformamide (DMF).
(2) The process according to item (1), wherein in the compounds of formula I and II, R₁, R₃ and R₄ are independently from each other selected from the group consisting of
   (i) hydrogen (H),
   (ii) substituted or unsubstituted C1-C6 alkyl, preferably C1-C3 alkyl,
   (iii) substituted or unsubstituted C6-C18 aryl, preferably C6-C12,
   (iv) substituted or unsubstituted C7-C18 alkylaryl, preferably C7-C12 alkylaryl,
   R₂ is independently selected from the group consisting of
   (i') substituted or unsubstituted C1-C6 alkyl, preferably C1-C3 alkyl,
   (ii') substituted or unsubstituted C6-C18 aryl, preferably C6-C12,
   (iii') substituted or unsubstituted C7-C18 alkylaryl, preferably C7-C12 alkylaryl
   (iv') formyl (-CO-H),
   (v') oxoalkyl, oxoaryl, oxoalkylaryl (-CO-alkyl, -CO-aryl, -CO-alkylaryl), wherein alkyl, aryl and alkylaryl are defined as in items (i'), (ii') and (iii') above,
   (vi') alkyloxycarbonyl (-CO-O-alkyl), aryloxycarbonyl (-CO-O-aryl), alkylaryloxycarbonyl (-CO-O-alkylaryl) or vinyloxycarbonyl (-CO-O-CH=CH₂), wherein alkyl, aryl and alkylaryl are defined as in items (i'), (ii') and (iii') above,
   (vii') N-unsubstituted carbamoyl (-CO-NH₂) or N-substituted carbamoyl (-CO-NR'R") in which R' and R" independently from each other represent alkyl, aryl or alkylaryl as defined as in items (i'), (ii') and (iii') above,
   (viii') cyano (-CN),
   (ix') alkylsulfonyl (-SO₂-alkyl), arylsulfonyl (-SO₂-aryl) or alkylarylsulfonyl (-SO₂-alkylaryl),
      wherein alkyl, aryl and alkylaryl are defined as in items (i'), (ii') and (iii') above, preferably R₂ is selected from any one of structural characteristics (iv') to (ix'),
   or R₂ together with either R₃ or R₄ forms a 5 to 6 membered monocyclic ring, optionally including within said monocyclic ring any one of structural characteristics (v'), (vi') and (vii'), preferably R₃ and R₄ are independently from each other selected from hydrogen (H) or C1-C3 alkyl, or either R₃ or R₄ together with R₂ forms a 5 to 6 membered monocyclic ring, optionally including within said monocyclic ring any one of structural characteristics (v'), (vi') and (vii'), more preferably R₃ = H and R₄ = H or C1-C3 alkyl, or either R₃ or R₄ together with R₂ forms a 5 to 6 membered monocyclic ring, optionally including within said monocyclic ring any one of structural characteristics (v'), (vi') and (vii'),
   even more preferably R₃ = R₄ = H.
(3) A process for preparation of a compound of formula IV, 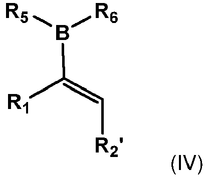 wherein R₁ is selected from the group consisting of
   (i) hydrogen (H),
   (ii) substituted or unsubstituted C1-C12 alkyl,
   (iii) substituted or unsubstituted C6-C24 aryl ,
   (iv) substituted or unsubstituted C7-C24 alkylaryl,
   (v) alkyloxycarbonyl (-CO-O-alkyl) or aryloxycarbonyl (-CO-O-aryl), wherein alkyl and aryl are defined as in items (i) and (ii) above
   R₂' is substituted or unsubstituted C6-C24 aryl,
   R₅ and R₆ are independently from each other selected from the group consisting of
   (i") substituted or unsubstituted C1-C12 alkyl or alkoxy,
   (ii") substituted or unsubstituted C6-C14 aryl or aryloxy,
   (iii") halogeno, and
   or R₅ and R₆ together form a chiral or non-chiral 5 to 10, particularly 5 to 6 membered mono or bicyclic ring, wherein the ring is optionally substituted at least one position with C1-C12 alkyl and/or C6-C14 aryl;
   the process comprising the steps of:
   (a) providing a compound of formula III, 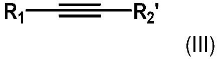 wherein R₁ and R₂' are defined as above, and
   (b) reacting the compound of formula III with a boronating agent H-BR₅R₆ or R₆R₅B-B-R₅R₆ wherein R₅ and R₆ are defined as above, in the presence of water as solvent and a catalyst system comprising copper in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻) acetate (OAc⁻), tert-butoxide (Ot-Bu⁻) and/or O²⁻ (oxide),
      wherein the reaction mixture is free or essentially free of organic solvent(s).

As to the meaning of the terms "chiral center", "alkyl", "aryl", "alkylaryl", "substituted" "catalyst system", "base activator", "free of or essentially free of organic solvent" and "organic solvent" , reference is made to the explanations under item (1) above.
(4) The process according to item (3), wherein in the compounds of formula III and IV,
   R₁ is selected from the group consisting of
   (i) hydrogen (H),
   (ii) substituted or unsubstituted C1-C6 alkyl, preferably C1-C3 alkyl,
   (iii) substituted or unsubstituted C6-C18 aryl, preferably C6-C12,
   (iv) substituted or unsubstituted C7-C18 alkylaryl, preferably C7-C12 alkylaryl,
   (v) alkyloxycarbonyl (-CO-O-alkyl) or aryloxycarbonyl (-CO-O-aryl),
   and R₂' is selected from substituted or unsubstituted C6-C18 aryl, preferably C6-C12.
(5) The process according to any one of the preceding items, wherein the catalytic system is in the form of a salt essentially consisting of a copper cation in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻) acetate (OAc⁻) and tert-butoxide (Ot-Bu⁻), or the catalytic system is in the form of copper oxide in which copper has oxidation state (I) or (II) (Cu₂O or CuO); preferably the catalytic system is in the form of a salt essentially consists of a copper cation in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻) acetate (OAc⁻) and *tert-*butoxide (O*t*-Bu⁻); more preferably a salt essentially consisting of copper cation in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻), acetate (OAc⁻); even more preferably a salt essentially consisting of copper cation in oxidation state (II) and at least one anion selected from the group consisting of carbonate (CO₃²⁻), sulfate (SO₄²⁻), nitrate (NO₃⁻), phosphate (PO₄³⁻), hydroxide (OH⁻) and acetate (OAc⁻); and in particular, the catalytic system is copper carbonate (CuCO₃).

The term "essentially consisting of" as used herein means that minimum traces, that is ≤ 30 g per kg salt or oxide, of impurities of anion(s) and/or cation(s) may be present as production-related, unavoidable contaminants/impurities. Furthermore, water may be present in the salt, typically in the form of crystallization water.
(6) The process according to any one of the preceding items, wherein the catalyst system is formed in situ by using a copper salt and a base, wherein the salt is preferably selected from carbonate (CO₃²⁻), sulfate (SO₄²⁻), nitrate (NO₃⁻), phosphate (PO₄³⁻), hydroxide (OH⁻) acetate (OAc⁻) and *tert-*butoxide (Ot-Bu⁻), and the base is preferably selected from Na₂CO₃, K₂CO₃, Cs₂CO₃ and MgCO₃.
(7) The process according to any one of the preceding items, wherein the boronating agent is selected from the group consisting of boronic esters, alkyl boranes and alkyl-aryl boranes, preferably chiral boronic esters, chiral alkyl borane and chiral alkyl-aryl boranes.

The terms "chiral" as used herein means that a compound can not be superimposed on its mirror image.
(8) The process according to any one of the preceding items, wherein the boronating agent is selected from the group consisting of bis(pinacolato)diboron, catecholborane, bis(neopentyl-glycolato)diboron, bis(hexylene-glycolato)diboron, (S)-bis(pinene)borane, (R)-bis(pinene)borane, bis(terpenoyl)borane, pinacolatoborane, bis(catecholato)diboron, disamylborane9-borabicyclo[3.3.1]nonane (9-BBN), diisopinocampheylboran (Ipc₂BH), preferably bis(pinacolato)diboron.
(9) The process according to item (1), (2) and (5) to (8), wherein the compound of formula I is selected from the group consisting of 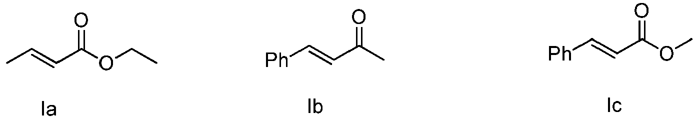 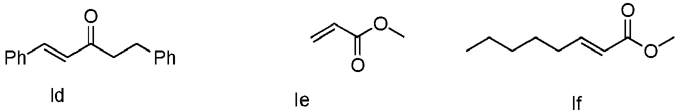 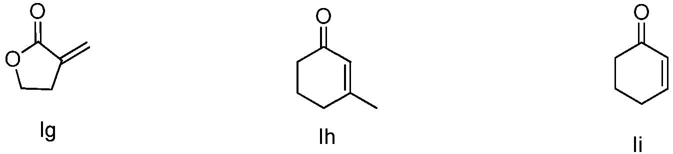 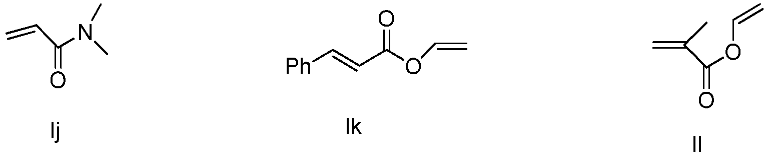 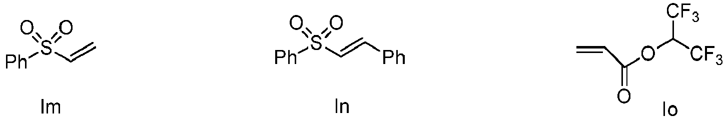 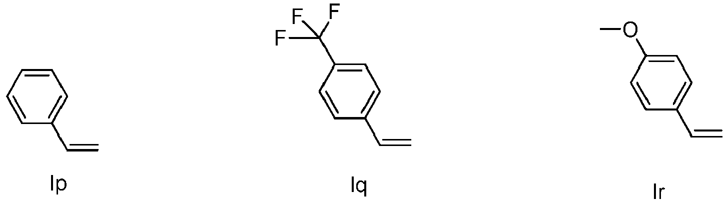 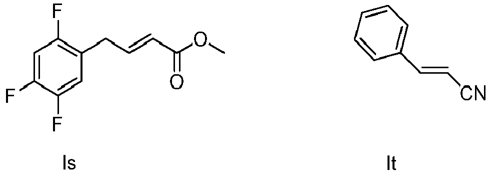
(10) The process according to any one of items (3) to (8), wherein compound of formula III is selected from the group consisting of 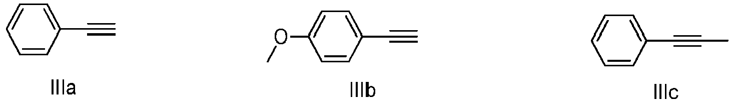 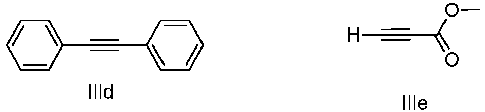
(11) The process according to any one of the preceding items, wherein in step (b), the catalytic system is present in an amount of 1-20 mol%, preferably 1.5-16 mol%, more preferably of 2-12 mol%, and even more preferably 3-8 mol% relative to the compound of formula I or compound of formula III.
(12) The process according to any one of the preceding items, wherein in step (b), the boronating agent is present in an amount of 1.05-1.5 equivalents, preferably of 1.1-1.3 equivalents relative to compound of formula I or compound of formula III.
(13) The process according to any one of the preceding items, wherein the reaction mixture of step (b) further comprises at least one ligand.
(14) The process according to item (13), wherein the at least one ligand is present in an amount of 1-25 mol%, preferably 1.5-18 mol%, more preferably 2-14 mol%, even more preferably 2.5-12 mol%, and in particular 3-6 mol% relative to compound of formula I or compound of formula III.
(15) The process according to item (13) or (14), wherein at least one ligand is selected from monophosphine ligand, diphosphine ligand, *N,O-*containing ligand and O-containing ligand.
(16) The process according to item (15), wherein at least one ligand is selected from monophosphine ligands selected from triphenylphosphine, trimethylphosphine, tricyclohexylphosphine, tributylphosphine, tri-(*o*-tolyl)-phosphine, tri-(2-furyl)phosphine, tris(dimethylamino)-phosphine, tribenzylphosphine, tripyrolydinophosphine, tris(4-methoxyphenyl)phosphine and any combination thereof, preferably triphenylphosphine.
(17) The process according to item (15), wherein at least one ligand is selected from diphosphine ligands selected from 1,2-bis(diphenyl-phosphino)benzene, 1,1,-bis(di-*tert-*butylphosphino)ferrocene, (oxydi-2,1-phenylene)bis-(diphenylphosphine), and any combination thereof, preferably 1,2-diphenylphosphinobenzene or 1,1-bis(di-*tert*-butylphosphino)ferrocene.
(18) The process according to item (15), wherein at least one ligand is selected from *N,O*-containing ligand, in particular *D*-glucosamine.
(19) The process according to item (15), wherein at least one ligand is selected from *O*-containing, preferably *D*-glucose.
(20) The process according to items (15) to (19), wherein at least one ligand is chiral.

As to the meaning of the term "chiral", reference is made to item (7) above.
(21) The process according to item (20), wherein the ligand is selected from the group consisting of (*R*)-2,2'-bis(diphenylphosphino)-1,1-binaphthaiene, (*S*)-2,2'-bis(diphenylphosphino)-1,1-binaphthalene, (*S,R*)-(diphenylphosphino)-ferrocenyl-ethyldi-tert-butylphosphine, (*R,S*)-(diphenylphosphino)-ferrocenyl-ethyldi-*tert*-butylphosphine,(*S*)-1-(*S*p)-2-[2-(diphenylphosphino)-phenyl]-ferrocenyl-ethylbis[3,5-bis(trifluoromethyl)phenyl]phosphine, (*R*)-1-(*R*p)-2-[2-(diphenylphosphino)-phenyl]-ferrocenyl-ethylbis[3,5-bis(trifluoromethyl)phenyl]phosphine, (*S*)-4-*tert*-butyl-2-[(*S*p)-2-(diphenylphosphino)ferrocenyl]-2-oxazoline, (*R*)-4-tert-butyl-2-[(*S*p)-2-(diphenylphosphino)ferrocenyl]-2-oxazoline, (1*S*,1'*S*)-1,1'-bis[bis[3,5-bis(trifluoromethyl)phenyl]phosphino]-2,2'-bis[(*S*)-dimethylamino)phenylmethyl], (1*R*,1'*R*)-1,1'-bis[bis[3,5-bis(trifluoromethyl)phenyl]phosphino]-2,2'-bis[(*R*)-(dimethylamino)phenylmethyl], and any combination thereof, and is particularly (*R*)-2,2'-bis(diphenylphosphino)-1,1-binaphthalene, (*S*)-2,2'-bis(diphenylphosphino)-1,1-binaphthalene, and (*S*)-1-(*S*p)-2-[2-(diphenylphosphino)-phenyl]-ferrocenyl-ethylbis[3,5-bis(trifluoromethyl)phenyl]phosphine, (*R*)-1-(*R*p)-2-[2-(diphenylphosphino)-phenyl]-ferrocenyl-ethylbis[3,5-bis(trifluoromethyl)phenyl]phosphine.
(22) The process of any of the preceding items, wherein step (b) is carried out without adding an additional base activator.

The term "addional base activator" as used herein means a basic compound in addition to the base activator of the catalytic system.
(23) The process of any of the preceding items, wherein the reaction mixture of step (b) optionally further comprises a surfactant, preferably the surfactant is selected from the group consisting of nonionic polyethyleneglycols (PEGs) comprising 7 to 30 ethylene glycol units and salts of C8-C15 fatty acids or C8-C15 alkylsulfates, preferably the surfactant is selected from the group consisting of tocopheryl polyethylene glycol succinate (TPGS), sodium dodecylsulfate (SDS) and Triton X-100.
(24) The process according to item (23), wherein the surfactant is added to the reaction mixture of step (b) in an amount of 0.5 to 6 % by weight relative to the weight of the reaction mixture, preferably 2 to 3 % by weight.
(25) The process according to any of the preceding items, wherein step (b) is carried out at a temperature of 20°C to 100 °C, preferably of 22 °C to 60°C, more preferably 24 to 50 °C.
(26) The process according to any of the preceding items, wherein subsequent to step (b), the products are isolated without using organic solvents, preferably by means of distillation and/or precipitation or separation from water in seperatory funnel.
(27) The process according to item (9), wherein from a starting material in the form of any one of compounds of formula la to It according to item (9), a compound of formula IIa to IIt is respectively obtained having the structural formula

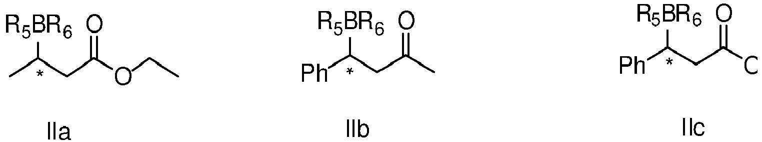

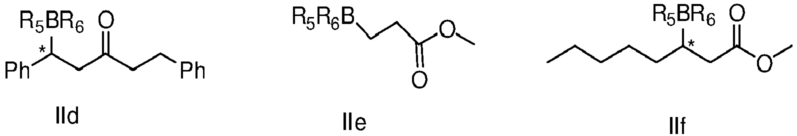

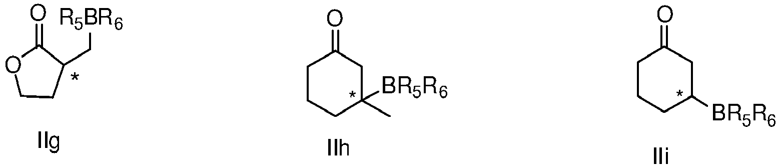

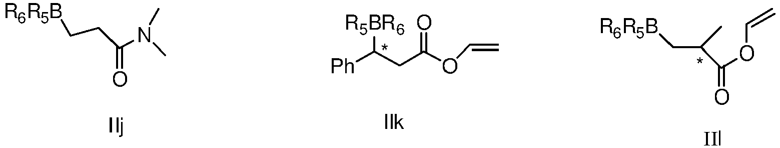

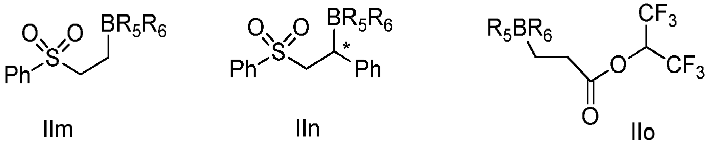

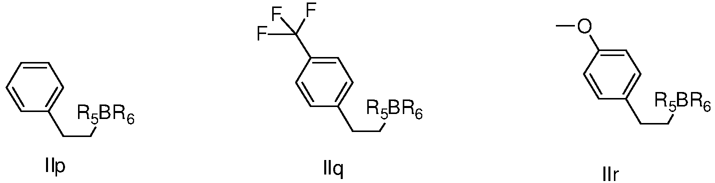

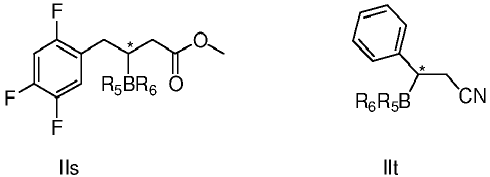

The designation "*" in the structural formulae of compounds of formula II indicates a chiral center, which is either in (*R*)- or (*S*)-configuration at marked center, or it is in racemic form,.
(28) The process according to any one of items (1), (2), (5) to (9) and (11) to (27), wherein a chiral boronating agent and/or a chiral ligand is applied in order to obtain a compound of formula II having an enantiomeric excess of at least 60%, preferably an enantiomeric excess of at least 85%, more preferably the enantiomeric excess is at least 90%, even more preferably at least 95% and in particular at least 98%.

The term "enantiomeric excess" as used herein means the difference between the percentage of one enantiomer of an optically active compound and the percentage of the other enantiomer of the same optically active compound. For example, an optically active compound which contains 75% R-enantiomer and 25% S-enantiomer will have an enantiomeric excess of 50% of *R*-enantiomer.
(29) The process according to item (28), wherein compounds of formula I and II are in the form of compound of formula Is as defined in item (9) and compound of formula IIs as defined in item (27) respectively, and the chiral ligand as defined in item (21).

As to the meaning of the term "chiral", reference is made to item (7) above.
(30) The process according to any one of items (7), (20), (21) and (29), wherein the chiral boronating agent, the chiral ligand is in enantiopure or diasteriomerically pure form.

The terms "enantiopure" and "diastereomerically pure means that an enantiomer or diastereomer is present in a purity of at least 99% enantiomeric excess and 99% diastereomeric excess respectively, preferably in a purity of 99.5-100% enantiomeric excess and 99.5-100% diasteriomeric excess respectively. The term "enantiomer " as used herein means two stereoisomers which represent mirror images of one another, but which are not superimposable. The term "diastereomers" as used herein means stereoisomers which do not represent enantiomers.
(31) The process according to item (10), wherein from a starting material in the form of any one of compounds of formula IIIa to IIId according to item (10), a compound of formula IVa to IVd is respectively obtained having the structural formula 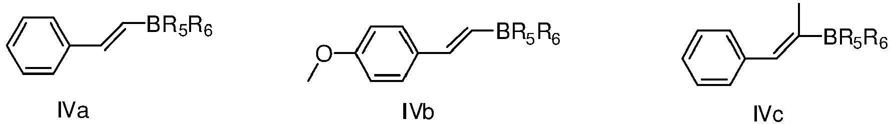 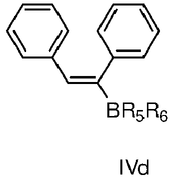
(32) A process for the preparation of sitagliptin having the structural formula, 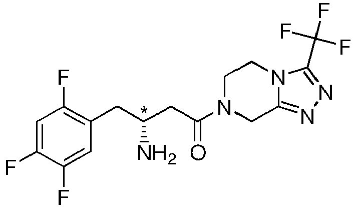 wherein the process comprises the steps of:
   i) preparing a compound of formula II', 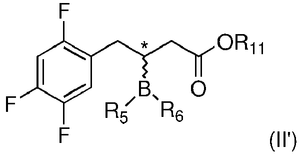 wherein R₅ and R₆ are defined as above, and R₁₁ is substituted or unsubstituted C1-C12 alkyl, C6-C24 aryl, or C7-C24 alkylaryl, from a compound of formula I', 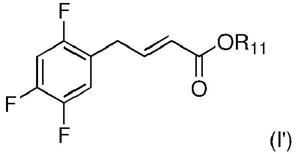 wherein R₁₁ is defined as above,
      according to a process according to any one of items (1), (2), (5) to (8) and (10) to (29),
   ii) further converting compound of formula II' to sitagliptin.
(33) The process according to item (32), wherein R₁₁ is substituted or unsubstituted C1-C6 alkyl, C6-C12 aryl or C7-C12 alkylaryl, preferably unsubstituted C1-C3 alkyl.
(34) The process according to any item (1) or (3), wherein bis(pinacolato)diboron is applied as boronating agent, and in compound of formula II or IV, R₅ and R₆ together with boron form a pinacolatoboron moiety having the structure 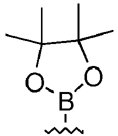
(35) Use of the process for preparation of compound of formula II or the compound of formula IV according to item (1) or (3), in the process of transformation of the C-B bond to C-O, C-N, C-S bond and C-X bond, wherein X is F, Cl, Br, I.
(36) Use of the process for preparation of compound of formula II or the compound of formula IV according to item (1) or (3), in the process of transformation of the C-B bond at the chiral center to C-O, C-N, C-S bond and C-X bond, wherein X is F, Cl, Br, I, respectively with the retention of configuration at the chiral center.

### Detailed description of the invention

The present invention is now described in more detail by referring to further preferred and further advantageous embodiments and examples, which are however presented for illustrative purposes only and shall not be understood as limiting the scope of the present invention.

According to one aspect the present invention relates to a process for preparation of a compound of formula II, 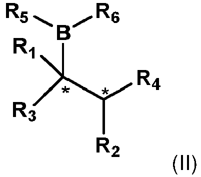 wherein R₁, R₃ and R₄ are independently from each other selected from the group consisting of
(i) hydrogen (H),
(ii) substituted or unsubstituted C1-C12 alkyl,
(iii) substituted or unsubstituted C6-C24 aryl,
(iv) substituted or unsubstituted C7-C24 alkylaryl,
R₂ is independently selected from the group consisting of
(i') substituted or unsubstituted C1-C12 alkyl,
(ii') substituted or unsubstituted C6-C24 aryl,
(iii') substituted or unsubstituted C7-C24 alkylaryl,
(iv') formyl (-CO-H),
(v') oxoalkyl, oxoaryl, oxoalkylaryl (-CO-alkyl, -CO-aryl, -CO-alkylaryl), wherein alkyl, aryl and alkylaryl are defined as in items (i'), (ii') and (iii') above,
(vi') alkyloxycarbonyl (-CO-O-alkyl), aryloxycarbonyl (-CO-O-aryl), alkylaryloxycarbonyl (-CO-O-alkylaryl) or vinyloxycarbonyl (-CO-O-CH=CH₂), wherein alkyl, aryl and alkylaryl are defined as in items (i'), (ii') and (iii') above,
(vii') N-unsubstituted carbamoyl (-CO-NH₂) or *N*-substituted carbamoyl (-CO-NR'R") in which R' and R" independently from each other represent alkyl, aryl or alkylaryl as defined as in items (i'), (ii') and (iii') above,
(viii') cyano (-CN),
(ix') alkylsulfonyl (-SO₂-alkyl), arylsulfonyl (-SO₂-aryl) or alkylarylsulfonyl (-SO₂-alkylaryl), wherein alkyl, aryl and alkylaryl are defined as in items (i'), (ii') and (iii') above,
or R₂ together with either R₃ or R₄ forms a 5 to 8 membered monocyclic ring, preferably a 5 to 6 membered ring, optionally including within said monocyclic ring any one of structural characteristics (v'), (vi') and (vii'),
R₅ and R₆ are independently from each other selected from the group consisting of
(i") substituted or unsubstituted C1-C12 alkyl or alkoxy,
(ii") substituted or unsubstituted C6-C14 aryl or aryloxy,
(iii") halogeno, and
or R₅ and R₆ together form a chiral or non-chiral 5 to 10, particularly 5 to 6 membered mono or bicyclic ring, wherein the ring is optionally substituted at least one position with C1-C12 alkyl and/or C6-C14 aryl;
the process comprising the steps of:
(a) providing a compound of formula I, 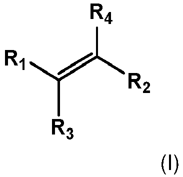 wherein R₁, R₂, R₃ and R₄ are defined as above, and
(b) reacting the compound of formula I with a boronating agent having the formula H-BR₅R₆ or R₆R₅B-B-R₅R₆ wherein R₅ and R₆ are defined as above, in the presence of water as solvent and a catalyst system comprising copper in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻) acetate (OAc⁻), *tert*-butoxide (O*t*-Bu⁻) and/or O²⁻ (oxide),
   wherein the reaction mixture is free or essentially free of organic solvent(s).

According to another aspect the invention relates to a process for preparation of a compound of formula IV, 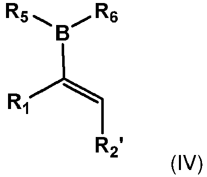 wherein R₁ is selected from the group consisting of
(i) hydrogen (H),
(ii) substituted or unsubstituted C1-C12 alkyl,
(iii) substituted or unsubstituted C6-C24 aryl,
(iv) substituted or unsubstituted C7-C24 alkylaryl,
(v) alkyloxycarbonyl (-CO-O-alkyl) or aryloxycarbonyl (-CO-O-aryl).
R₂' is substituted or unsubstituted C6-C24 aryl,
R₅ and R₆ are independently from each other selected from the group consisting of
(i") substituted or unsubstituted C1-C12 alkyl or alkoxy,
(ii") substituted or unsubstituted C6-C14 aryl or aryloxy,
(iii") halogeno, and
or R₅ and R₆ together form a chiral or non-chiral 5 to 10, particularly 5 to 6 membered mono or bicyclic ring, wherein the ring is optionally substituted at least one position with C1-C12 alkyl and/or C6-C14 aryl;
the process comprising the steps of:
(a) providing a compound of formula III, 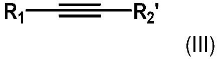 wherein R₁ and R₂' are defined as above, and
(b) reacting the compound of formula III with a boronating agent H-BR₅R₆ or R₆R₅B-B-R₅R₆ wherein R₅ and R₆ are defined as above, in the presence of water as solvent and a catalyst system comprising copper in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻) acetate (OAc⁻), *tert*-butoxide (O*t*-Bu⁻) and/or O²⁻ (oxide),
wherein the reaction mixture is free or essentially free of organic solvent(s).

The above procedural concepts provide for efficient and selective β-boration of alkene compounds of formula I and alkyne compounds of formula III respectively. It was surprisingly found that the boration reaction can be carried out in a reaction mixture which is free or essentially free of organic solvent(s), wherein reaction rate and/or conversion of the starting material is significantly improved compared to β-boration reactions carried out in pure organic solvent(s) or mixtures of organic solvent(s) and water in which mixtures the amount of organic solvent predominates the amount of water. As an additional benefit, with the present inventive concept, considerable amounts of harmful or even toxic organic solvent(s) can be saved, preferably it can be dispensed with organic solvent(s). This in turn provides for a much more eco-friendly reaction medium compared to conventional β-boration reactions in which typically pure organic solvent(s) are applied as the solvent. Furthermore, the procedural concepts according to the above aspects of the invention provide for considerably improved working conditions in a production process, since water is absolutely harmless for health, while the relatively volatile organic solvents are problematic in view of occupational exposure limits. Besides, as regards the catalyst system, it can be surprisingly dispensed with toxic and/or expensive metal catalysts such as platinum, rhodium, palladium or nickel. Furthermore, the present procedural concepts render possible to dispense with a ligand which is typically applied in conventional β-boration processes; ligands may be used only optionally, if desired.

According to a preferred embodiment, in the compounds of formula I and II,
R₁, R₃ and R are independently from each other selected from the group consisting of
(i) hydrogen (H),
(ii) substituted or unsubstituted C1-C6 alkyl, preferably C1-C3 alkyl,
(iii) substituted or unsubstituted C6-C18 aryl, preferably C6-C12,
(iv) substituted or unsubstituted C7-C18 alkylaryl, preferably C7-C12 alkylaryl,
R₂ is independently selected from the group consisting of
(i') substituted or unsubstituted C1-C6 alkyl, preferably C1-C3 alkyl,
(ii') substituted or unsubstituted C6-C18 aryl, preferably C6-C12,
(iii') substituted or unsubstituted C7-C18 alkylaryl, preferably C7-C12 alkylaryl
(iv') formyl (-CO-H),
(v') oxoalkyl, oxoaryl, oxoalkylaryl (-CO-alkyl, -CO-aryl, -CO-alkylaryl), wherein alkyl, aryl and alkylaryl are defined as in items (i'), (ii') and (iii') above,
(vi') alkyloxycarbonyl (-CO-O-alkyl), aryloxycarbonyl (-CO-O-aryl), alkylaryloxycarbonyl (-CO-O-alkylaryl) or vinyloxycarbonyl (-CO-O-CH=CH₂), wherein alkyl, aryl and alkylaryl are defined as in items (i'), (ii') and (iii') above,
(vii') N-unsubstituted carbamoyl (-CO-NH₂) or *N*-substituted carbamoyl (-CO-NR'R") in which R' and R" independently from each other represent alkyl, aryl or alkylaryl as defined as in items (i'), (ii') and (iii') above,
(viii') cyano (-CN),
(ix') alkylsulfonyl (-SO₂-alkyl), arylsulfonyl (-SO₂-aryl) or alkylarylsulfonyl (-SO₂-alkylaryl),
wherein alkyl, aryl and alkylaryl are defined as in items (i'), (ii') and (iii') above, preferably R₂ is selected from any one of structural characteristics (iv') to (ix'), or R₂ together with either R₃ or R₄ forms a 5 to 6 membered monocyclic ring, preferably R₃ and R₄ are independently from each other selected from hydrogen (H) or C1-C3 alkyl, or either R₃ or R₄ together with R₂ forms a 5 to 6 membered monocyclic ring, more preferably R₃ = H and R₄ = H or C1-C3 alkyl, or either R₃ or R₄ together with R₂ forms a 5 to 6 membered monocyclic ring,
even more preferably R₃ = R₄ = H.

According to another preferred embodiment, in the compounds of formula III and IV,
R₁ is selected from the group consisting of
(i) hydrogen (H),
(ii) substituted or unsubstituted C1-C6 alkyl, preferably C1-C3 alkyl,
(iii) substituted or unsubstituted C6-C18 aryl, preferably C6-C12,
(iv) substituted or unsubstituted C7-C18 alkylaryl, preferably C7-C12 alkylaryl,
alkyloxycarbonyl (-CO-O-alkyl), aryloxycarbonyl (-CO-O-aryl), and R₂' is selected from substituted or unsubstituted C6-C18 aryl, preferably C6-C12.

Preferably, in step (b), the catalytic system is in the form of a salt essentially consisting of a copper cation in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻) acetate (OAc⁻) and tert-butoxide (Ot-Bu⁻), or the catalytic system is in the form of copper oxide in which copper has oxidation state (I) or (II) (Cu₂O or CuO); more preferably the catalytic system is in the form of a salt essentially consists of a copper cation in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻) acetate (OAc⁻) and tert-butoxide (O*t*-Bu⁻); even more preferably a salt essentially consisting of copper cation in oxidation state (I) or (II) and at least one anion selected from the group consisting of carbonate (CO₃²⁻), sulfate (SO₄²⁻), nitrate (NO₃⁻), phosphate (PO₄³⁻), hydroxide (OH⁻), acetate (OAc⁻); yet even more preferably a salt essentially consisting of copper cation in oxidation state (II) and at least one anion selected from the group consisting of carbonate (CO₃²⁻), sulfate (SO₄²⁻), nitrate (NO₃⁻), phosphate (PO₄³⁻), hydroxide (OH⁻) and acetate (OAc⁻); and in particular, the catalytic system is copper carbonate (CuCO₃).

According to this embodiment of the invention, particularly suitable catalytic systems are provided, since the catalytic system in the form of a salt or an oxide renders possible to dispense with additional base activators which are typically applied in conventional β-boration processes. In particular, copper carbonate (CuCO₃) represents a readily available and surprisingly effective catalytic system, as acting as a metal and a base activator in one molecule.

According to this embodiment of the invention the catalyst system is formed in situ by using a copper salt and a base, wherein the salt is selected from carbonate (CO₃²⁻), sulfate (SO₄²⁻), nitrate (NO₃⁻), phosphate (PO₄³⁻), hydroxide (OH⁻) acetate (OAc⁻) and tert-butoxide (Ot-Bu⁻), and the base is selected from Na₂CO₃, K₂CO₃, Cs₂CO₃ and MgCO₃.

According to a further preferred embodiment, in step (b) of the present processes, the boronating agent is selected from the group consisting of boronic esters, alkyl boranes and alkyl-aryl boranes, preferably chiral boronic esters, chiral alkyl borane and chiral alkyl-aryl boranes.

Preferably, the boronating agent is selected from the group consisting of bis(pinacolato)diboron, catecholborane, bis(neopentyl-glycolato)diboron, bis(hexylene-glycolato)diboron, (S)-bis(pinene)borane, (R)-bis(pinene)borane, bis(terpenoyl)borane, pinacolatoborane, bis(catecholato)diboron, disamylborane9-borabicyclo[3.3.1]nonane (9-BBN), diisopinocampheylboran (Ipc₂BH), preferably bis(pinacolato)diboron.

In this way, the boronating agent is suitably selected in view of regioselectivity of the reaction and/or subsequent convertibility into another functional group.

In a preferred embodiment, the compound of formula I is selected from the group consisting of 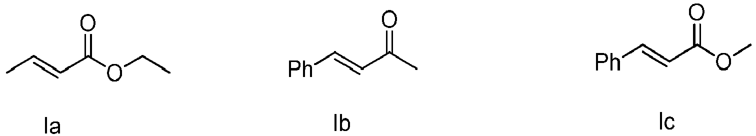 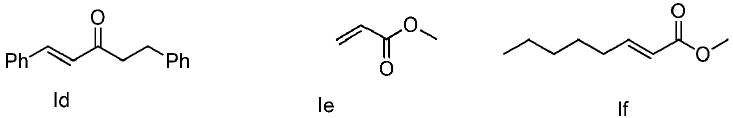 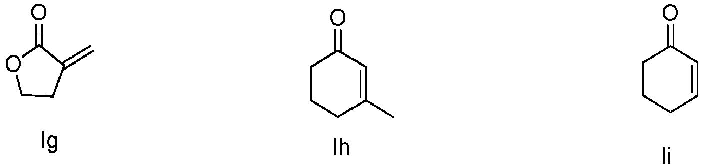 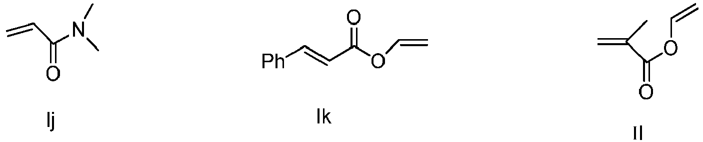 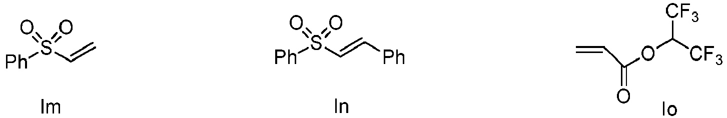 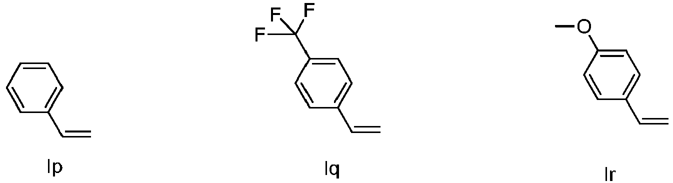 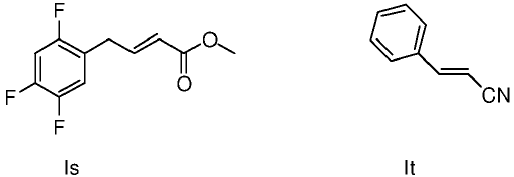 and the compound of formula III is selected from the group consisting of

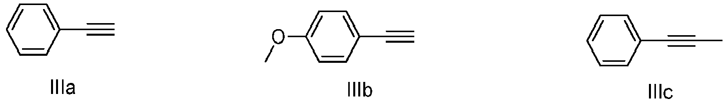

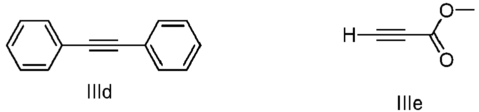

According to this embodiment, particularly suitable starting materials are provided.

In a preferred embodiment, the catalytic system is present in an amount of 1-20 mol%, preferably 1.5-16 mol%, more preferably of 2-12 mol%, and even more preferably 3-8 mol% relative to the compound of formula I or III.

In another preferred embodiment, the boronating agent is present in an amount of 1.05-1.5 equivalents, preferably 1.1-1.3 equivalents relative to the compound of formula I or III.

In another preferred embodiment, the reaction mixture of the present processes comprises at least one ligand. Surprisingly, the presence of a ligand improves reaction rate and/or conversion of the substrate of the reaction.

Preferably, the at least one ligand is present in an amount of 1-25 mol%, preferably 1.5-18 mol%, more preferably 2-14 mol%, even more preferably 2.5-12 mol%, and in particular 3-6 mol% relative to compound of formula I or II.

According to a preferred embodiment, the at least one ligand is selected from monophosphine ligands selected from triphenylphosphine, trimethylphosphine, tricyclohexylphosphine, tributylphosphine, tri-(o-tolyl)-phosphine, tri-(2-furyl)phosphine, tris(dimethylamino)-phosphine, tribenzylphosphine, tripyrolydinophosphine, tris(4-methoxyphenyl)phosphine and any combination thereof. In a further preferred embodiment, the ligand is diphosphine ligand selected from 1,2-bis(diphenyl-phosphino)benzene, 1,1,-bis(di-tert-butylphosphino)ferrocene, (oxydi-2,1-phenylene)bis-(diphenylphosphine), and any combination thereof. In another preferred embodiment the ligand is *N,O*-containing ligand, in particular *D*-glucozamine. In yet another preferred embodiment, the ligand is O-containing ligand, in particular *D*-glucose.

It was surprisingly found that structurally simple and readily available ligands provide for significantly improved reaction rate and/or conversion of the substrate in the present process.

In the most preferred embodiment, the ligand is chiral and selected from (*R*)-2,2'-bis(diphenylphosphino)-1,1-binaphthalene, (*S*)-2,2'-bis(diphenylphosphino)-1,1-binaphthalene, (*S,R*)-(diphenylphosphino)-ferrocenyl-ethyldi-*tert*-butylphosphine, (*R,S*)-(diphenylphosphino)-ferrocenyl-ethyldi-tert-butylphosphine,(*S*)-1-(*S*p)-2-[2-(diphenylphosphino)-phenyl]-ferrocenyl-ethylbis[3,5-bis(trifluoromethyl)phenyl]phosphine, (*R*)-1-(*R*p)-2-[2-(diphenylphosphino)-phenyl]-ferrocenyl-ethylbis[3,5-bis(trifluoromethyl)phenyl]phosphine, (*S*)-4-tert-butyl-2-[(*S*p)-2-(diphenylphosphino)ferrocenyl]-2-oxazoline, (*R*)-4-tert-butyl-2-[(*S*p)-2-(diphenylphosphino)ferrocenyl]-2-oxazoline, (1*S*,1'*S*)-1,1'-bis[bis[3,5-bis(trifluoromethyl)phenyl]phosphino]-2,2'-bis[(S)-dimethylamino)phenylmethyl], (1*R*,1'*R*)-1,1'-bis[bis[3,5-bis(trifluoromethyl)phenyl]phosphino]-2,2'-bis[(*R*)-(dimethylamino)phenylmethyl], and any combination thereof, and is particularly (*R*)-2,2'-bis(diphenylphosphino)-1,1-binaphthalene, (*S*)-2,2'-bis(diphenylphosphino)-1,1-binaphthalene, and (*S*)-1-(*S*p)-2-[2-(diphenylphosphino)-phenyl]-ferrocenyl-ethylbis[3,5-bis(trifluoromethyl)phenyl]phosphine, (*R*)-1-(*R*p)-2-[2-(diphenylphosphino)-phenyl]-ferrocenyl-ethylbis[3,5-bis(trifluoromethyl)phenyl]phosphine.

Chiral ligands are particularly advantageous, since they provide for enantiomeric excess in the products of compound of formula II and IV respectively.

In yet another preferred embodiment the reaction mixture further comprises at least one chiral ligand. Further surprisingly, it was found that applying a chiral ligand for high enantioselectivity of up to 95% ee in water as the solvent. It is a common general knowledge that asymmetric transformations especially enantioselective catalysis in water is problematic, due to low solubility and incompatibility of chiral catalysts with water.

In another preferred embodiment, step (b) is carried out without adding an additional base activator. Surprisingly, it has been found that β-boration was extremely efficient without using an additional base activator which is typically applied in conventional β-boration processes.

In another preferred embodiment the reaction mixture of step (b) further comprises a surfactant, preferably the surfactant is selected from the group consisting of nonionic polyethyleneglycols (PEGs) comprising 7 to 30 ethylene glycol units and salts of C8-C15 fatty acids or C8-C15 alkylsulfates, preferably the surfactant is selected from the group consisting of tocopheryl polyethylene glycol succinate (TPGS), sodium dodecylsulfate (SDS) and Triton X-100.

In yet another preferred embodiment, step (b) is carried out at a temperature of 20 °C to 100 °C, preferably of 22 °C to 60 °C, more preferably 24 °C to 50 °C. Surprisingly, it was found that the reactions of the present invention may be performed under mild and eco-friendly conditions, e.g. at room temperature or slightly elevated temperature.

According to another preferred embodiment, subsequent to process step (b), the products are isolated without using any organic solvents, preferably by means of distillation or by precipitation or separation from water in a seperatory funnel.

Preferably, in case a starting material in the form of any one of compounds of formula la to It is applied, a compound of formula IIa to IIt is respectively obtained having the structural formula

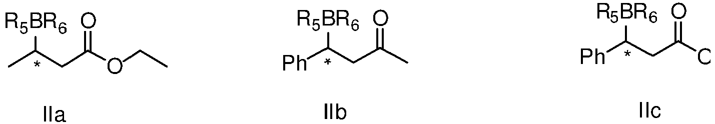

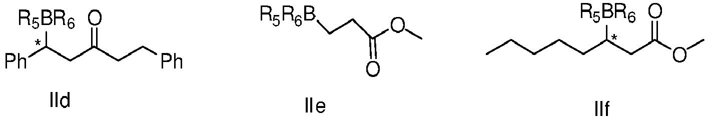

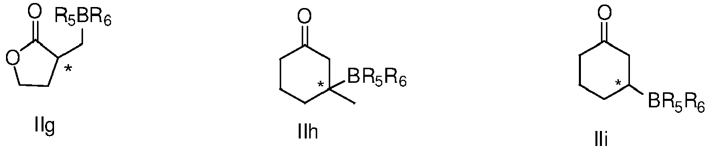

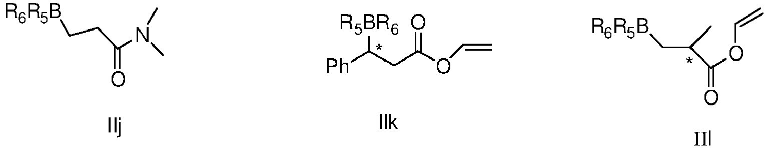

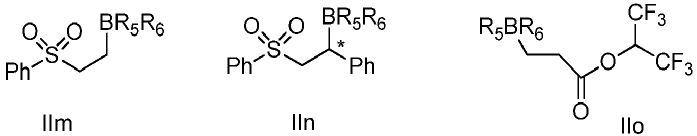

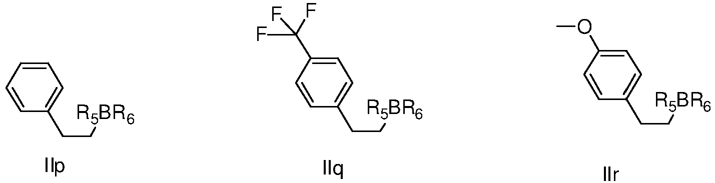

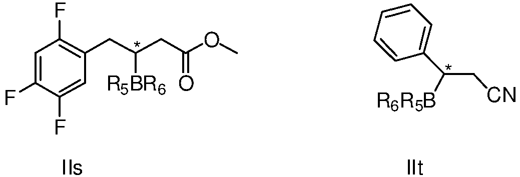

According to another preferred embodiment, a chiral boronating agent and/or a chiral ligand is applied in order to obtain a compound of formula II having an enantiomeric excess of at least 60%, preferably an enantiomeric excess of at least 85%, more preferably the enantiomeric excess is at least 90%, even more preferably at least 95% and in particular at least 98%. In this way, by suitably selecting particular types of chiral boronating agent and/or a chiral ligand, compound of formula II can be obtained in an advantageous high enantiomeric excess or even in enantiomerically pure state.

According to a particularly preferred embodiment, compounds of formula I and II are in the form of compound of formula Is and compound of formula IIs respectively, and the chiral ligand is as defined in item (21). It was surprisingly found that compound of formula IIs can be obtained in high enantiomeric excess when a ligand as defined in item (21) is applied.

Preferably, from a starting material in the form of any one of compounds of formula IIIa to IIId, a compound of formula IVa to IVd is respectively obtained having the structural formula

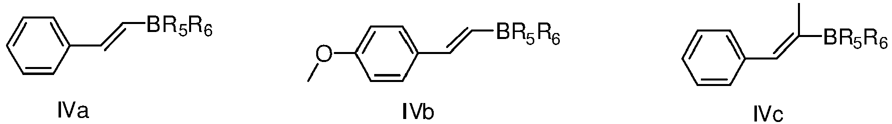

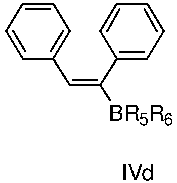

According to a particularly preferred aspect of the present invention, a process for the preparation of sitagliptin having the structural formula 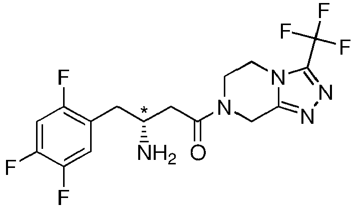 is provided, wherein the process comprises the steps of:
i) preparing a compound of formula II', 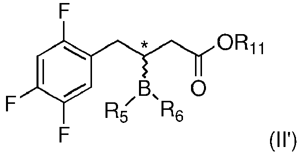 wherein R₅ and R₆ are defined as above, and R₁₁ is substituted or unsubstituted C1-C12 alkyl, C6-C24 aryl, or C7-C24 alkylaryl, from a compound of formula I', 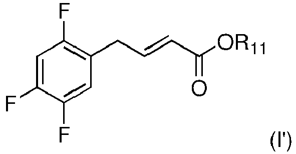 wherein R₁₁ is defined as above,
   according to a process according to any one of items (1), (2), (5) to (9) and (11) to (31),
ii) further converting compound of formula II' to sitagliptin.

The above mentioned aspect provides for a particularly advantageous process for preparing sitagliptin owing to the application of the present procedural aspects of β-boration and the beneficial effects involved therewith.

Preferably, R₁₁ of compound of formula II' is substituted or unsubstituted C1-C6 alkyl, C6-C12 aryl or C7-C12 alkylaryl, more preferably unsubstituted C1-C3 alkyl.

According to a further preferred embodiment, in any one of the aforementioned processes, bis(pinacolato)diboron is applied as boronating agent, and in compound of formula II or IV, R₅ and R₆ together with boron form a pinacolatoboron moiety having the structure

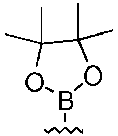

According to still further preferred embodiment the process for preparation of compound of formula II or the compound of formula IV according to item (1) or (3) is used in the process of transformation of the C-B bond to C-O, C-N, C-S bond and C-X bond, wherein X is F, Cl, Br, I.

According to still further preferred embodiment the process for preparation of compound of formula II or the compound of formula IV according to item (1) or (3) is used in the process of transformation of the C-B bond at the chiral center to C-O, C-N, C-S bond and C-X bond, wherein X is F, Cl, Br, I, respectively with the retention of configuration at the chiral center.

The following examples are merely illustrative of the present invention and they should not be considered as limiting the scope of the invention in any way. The examples and modifications or other equivalents thereof will become apparent to those versed in the art in the light of the present entire disclosure.

### Examples

### Example 1: β-Boration of 1-(trifluoromethyl)-4-vinylbenzene to 4,4,5,5-tetramethyl-2-(4-trifluoromethyl)phenethyl)-1,3,2-dioxoborolane in water:

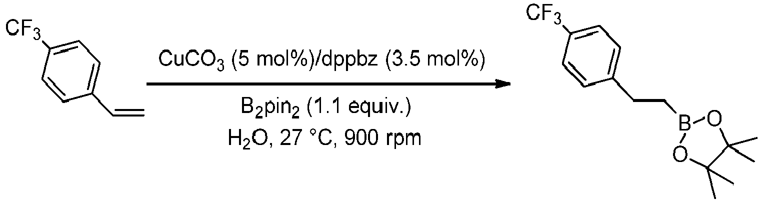

In a dry two-necked round bottom flask were placed catalyst CuCO₃ (0.05 mmol, 12.50 mg, 5 mol% according to starting material) and ligand 1,2-diphenylphosphinobenzene (dppbz; 0.035 mmol, 16.0 mg, 3.5 mol% according to starting material) under the nitrogen. Afterwards 2.5 mL of deionized water was added and reaction mixture was vigorously (900 rpm) stirred at ambient temperature for 15 min. The boronating reagent bis(pinacolato)diboron (1.1 mmol, 280.0 mg, 1.1 equiv.) was added in one portion and such reaction mixture was stirred at ambient temperature for 30 min. Starting material 1-(trifluoromethyl)-4-vinylbenzene (1.0 mmol) was slowly dropped into the reaction system and such reaction mixture was intensively stirred at 27 °C for 20 hours. The reaction mixture was diluted with brine (5 mL) and extracted with EtOAc (2 × 35 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1) to obtain 264 mg (88%, yield) of pure liquid product as determined with ¹H, ¹¹B, ¹³C NMR and MS analysis.
¹H NMR (500 MHz, CDCl₃, ppm) δ = 7.66-7.55 (m, 2H), 7.46-7.35 (m, 2H), 2.84 (t, J = 8.1 Hz, 2H), 1.26 (s, 12H), 1.16 (t, J= 8.1 Hz, 2H);
¹¹B (160 MHz, CDCl₃, ppm) δ = 33.8 (bs);
¹⁹F (470 MHz, CDCl₃, ppm) δ = - 63.2;
¹³C (125 MHz, CDCl₃, ppm) δ = 148.5, 128.3, 128.2, 125.1, 125.0, 83.2, 29.8, 24.8, 12.5 (broad, C-B); IR (neat): v= 2982, 2938, 1326, 1162, 1143, 1115.

### Example 2: β-Boration of 1-metoxy-4-vinylbenzene to 2-(4-methoxyphenethyl)-4,4,5,5-tetramethyl-1,3,2-dioxoborolane in water:

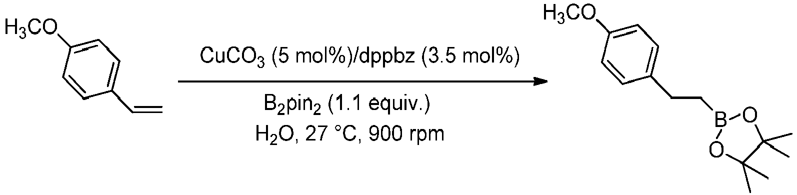

In a dry two-necked round bottom flask were placed catalyst CuCO₃ (0.05 mmol, 18.75 mg, 5 mol% according to starting material) and ligand 1,2-diphenylphosphinobenzene (dppbz; 0.035 mmol, 16.0 mg, 3.5 mol% according to starting material) under the nitrogen. Afterwards 2.5 mL of deionized water was added and reaction mixture was vigorously (900 rpm) stirred at ambient temperature for 15 min. The boronating reagent bis(pinacolato)diboron (1.1 mmol, 280.0 mg, 1.1 equiv.) was added in one portion and such reaction mixture was stirred at ambient temperature for 30 min. Starting material 1-methoxy-4-vinylbenzene (1.0 mmol) was slowly added into the reaction system and such reaction mixture was intensively stirred at 27 °C for 24 hours. The reaction mixture was diluted with brine (5 mL) and extracted with EtOAc (2 × 35 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1) to obtain 223 mg (85%, yield) of pure liquid product as determined with ¹H, ¹¹B, ¹³C NMR and MS analysis.
¹H NMR (500 MHz, CDCl₃, ppm) δ = 7.15 (m, 2H), 6.82 (m, 2H), 3.78 (s, 3H), 2.72 (t, *J*= 8.1 Hz, 2H), 1.25 (s, 12H), 1.12 (t, *J*= 8.1 Hz, 2H);
¹¹B (160 MHz, CDCl₃, ppm) δ = 34.1 (bs);
¹³C (125 MHz, CDCl₃, ppm) δ = 157.5, 136.5, 128.8, 128.3 113.6, 83.1, 55.2, 28.9, 24.8, 24.5, 13.2 (broad, C-B).

### Example 3: β-Boration of 1-phenyl-ethene to 4,4,5,5-tetramethyl-2-phenethyl-1,3,2-dioxaborolane in water:

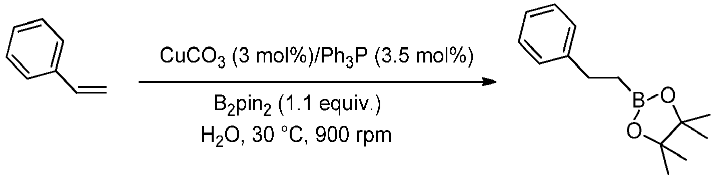

In a dry two-necked round bottom flask were placed catalyst CuCO₃ (0.03 mmol, 7.50 mg, 3 mol% according to starting material) and ligand 1,2-diphenylphosphinobenzene (dppbz; 0.035 mmol, 16.0 mg, 3.5 mol% according to starting material) under the nitrogen. Afterwards 2.5 mL of deionized water was added and reaction mixture was vigorously (900 rpm) stirred at ambient temperature for 15 min. The boronating reagent bis(pinacolato)diboron (1.1 mmol, 280.0 mg, 1.1 equiv.) was added in one portion and such reaction mixture was stirred at ambient temperature for 30 min. Finally, alkene 1-phenyl-ethene (1.0 mmol) was slowly dropped into the reaction system and such reaction mixture was intensively stirred at 30 °C for 24 hours. The reaction mixture was diluted with brine (5 mL) and extracted with EtOAc (2 × 35 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1, gradient elution) to obtain 213 mg (92%, yield) of pure product as determined with ¹H, ¹¹B, ¹³C NMR and MS analysis.
¹H NMR (500 MHz, CDCl₃, ppm) δ = 7.29-7.20 (m,4H), 7.18 (m, 1 H), 2.77 (t, *J* = 8.2 Hz, 2H), 1.25 (s, 12H), 1.16 (t, *J* = 8.2 Hz, 2H);
¹¹B (160 MHz, CDCl₃, ppm) δ= 33.9 (bs);
¹³C (125 MHz, CDCl₃, ppm) δ= 144.4, 128.8, 128.7, 128.5, 128.4, 125.5, 83.1, 29.7, 24.8, 12.9 (broad, C-B).

### Example 4: Ligandless β-boration of model alkene 1-phenyl-ethene to 4,4,5,5-tetramethyl-2-phenethyl-1,3,2-dioxaborolane in water:

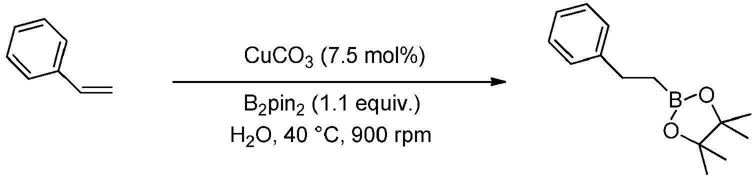

In a dry two-necked round bottom flask were placed catalyst CuCO₃ (0.075 mmol, 7.50 mg, 3 mol% according to starting material), 2.5 mL of deionized water was added and reaction mixture was vigorously (900 rpm) stirred at ambient temperature for 15 min. The boronating reagent bis(pinacolato)diboron (1.1 mmol, 280.0 mg, 1.1 equiv.) was added in one portion and such reaction mixture was stirred at ambient temperature for 30 min. starting material 1-phenyl-ethene (1.0 mmol) was slowly dropped into the reaction system and such reaction mixture was intensively stirred at 40 °C for 48 hours. The reaction mixture was diluted with brine (5 mL) and extracted with EtOAc (2 × 35 mL). Combined organic layers were again washed with brine (30 mL), dried over Na₂SO₄ and organic solvent was removed under the reduced pressure. The crude product was purified with column chromatography (SiO₂; n-hexane : EtOAc = 8.5 : 1.5) to obtain 35 mg (15% yield) of pure product as determined with ¹H, ¹¹B, ¹³C NMR and MS analysis.

### Example 5: β-Boration of 1-ethynyl-4-methoxybenzene to (E)-2-(4-methoxystryl)-4,4,5,5-tetramethyl-1,3,2-dioxaborolane in water:

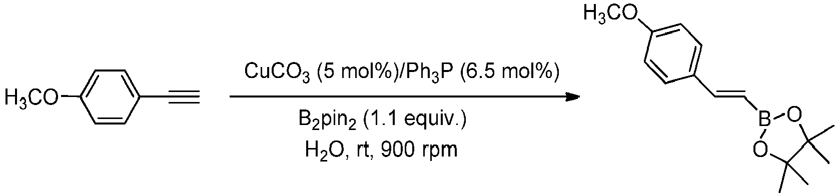

In a dry two-necked round bottom flask were placed catalyst CuCO₃ (0.05 mmol, 12.50 mg, 5 mol% according to starting material) and ligand Ph₃P (0.065 mmol, 16.4 mg, 6.5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material 1-ethynyl-4-methoxybenzene (1.0 mmol) was slowly added into the reaction system and such reaction mixture was intensively stirred at 27 °C for 24 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 3 : 2, gradient elution) or distillation under reduced pressure to obtain 221 mg (85%, yield) of pure liquid product as determined with ¹H, ¹¹B, ¹³C NMR and MS analysis.
¹H NMR (500 MHz, CDCl₃, ppm) δ = 7.45 (m, 2H), 7.36 (d, *J* = 18.4 Hz, 1H), 6.87 (m, 2H), 6.05 (d, *J*= 18.4 Hz, 1H), 3.82 (s, 3H), 1.30 (s, 12H);
¹¹B (160 MHz, CDCl₃, ppm) δ = 30.3 (bs);
¹³C (125 MHz, CDCl₃, ppm) δ = 160.3, 149.0, 133.7, 128.9, 113.9, 113.6, 83.1, 55.2, 24.7;
IR (neat): v = 2977, 2934, 1625, 1605, 1511, 1421, 1356, 1143, 1035, 996, 970, 815 cm⁻¹.

### Example 6: β-Boration of 1,2-diphenylethylene to (Z)-2-(1,2-diphenylvinyl)-4,4,5,5-tetramethyl-1,3,2-dioxaborolane in water:

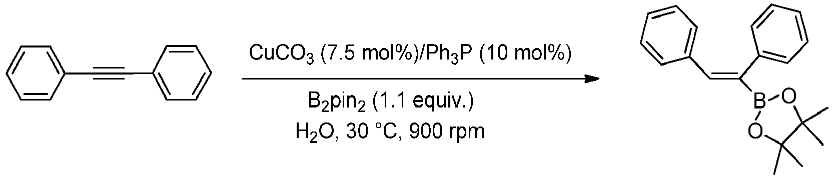

In a dry two-necked round bottom flask were placed catalyst CuCO₃ (0.075 mmol, 18.75 mg, 7.5 mol% according to starting material) and ligand Ph₃P (0.1 mmol, 25.2 mg, 10 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material 1,2-diphenylethylene (1.0 mmol) was slowly added into the reaction system and such reaction mixture was intensively stirred at 30 °C for 24 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1, gradient elution) to obtain 200 mg (65%, yield) of pure white solid product as determined with ¹H, ¹¹B, ¹³C NMR and MS analysis.
¹H NMR (500 MHz, CDCl₃, ppm) δ = 7.41 (s, 1H), 7.30-7.03 (m, 10H), 1.32 (s, 12H);
¹¹B (160 MHz, CDCl₃, ppm) δ = 30.7 (bs);
¹³C (125 MHz, CDCl₃, ppm) δ = 143.2, 140.4, 137.0, 129.9, 128.9, 128.3, 127.9, 127.6, 126.3, 83.8, 24.8.

### Example 7: β-Boration of 1-phenyl-propyne to (Z)-4,4,5,5-tetramethyl-2-(1-phenyl-prop-1-en-2-yl)-1,3,2-dioxaborolane in water:

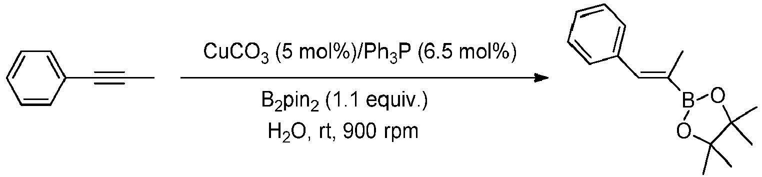

In a dry two-necked round bottom flask were placed catalyst CuCO₃ (0.05 mmol, 12.50 mg, 5 mol% according to starting material) and ligand Ph₃P (0.065 mmol, 16.4 mg, 6.5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Finally, alkyne 1-phenyl-propyne (1.0 mmol) was slowly dropped into the reaction system and such reaction mixture was intensively stirred at 27 °C for 24 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; *n-*hexane : EtOAc = 9 : 1, gradient elution) or distillation under reduced pressure to obtain 215 mg (88%, yield) of pure liquid product as determined with ¹H, ¹¹B, ¹³C NMR and MS analysis.
¹H NMR (500 MHz, CDCl₃, ppm) δ = 7.41-7.31 (m, 5H), 7.25 (bs, 1H), 2.00 (d, *J*= 1.8 Hz, 3H), 1.33 (s, 12H);
¹¹B (160 MHz, CDCl₃, ppm) δ= 30.8 (bs);
¹³C (125 MHz, CDCl₃, ppm) δ= 142.3, 137.9, 129.4, 128.0, 127.1, 83.4, 24.8, 15.9.

### Example 8: β-Boration of 1-phenyl-acethylene to (E)-4,4,5,5-tetramethyl-2-styryl-1,3,2-dioxaborolane in water:

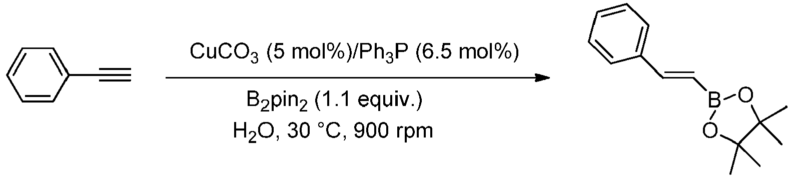

In a dry two-necked round bottom flask were placed catalyst CuCO₃ (0.05 mmol, 12.50 mg, 5 mol% according to starting material) and ligand Ph₃P (0.065 mmol, 16.4 mg, 6.5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material 1-phenyl-acethylene (1.0 mmol) was slowly added into the reaction system and such reaction mixture was intensively stirred at 30 °C for 24 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 9: 1, gradient elution) or distillation under reduced pressure to obtain 189 mg (82%, yield) of pure liquid product as determined with ¹H, ¹¹B, ¹³C NMR and MS analysis.
¹H NMR (500 MHz, CDCl₃, ppm) δ = 7.50 (m, 2H), 7.46 (d, *J*= 18.4 Hz, 1H), 7.41-7.30 (m, 3H), 6.20 (d, *J*= 18.7 Hz, 1H), 1.36-1.26 (m, 12H);
¹¹B (160 MHz, CDCl₃, ppm) δ = 30.3 (bs);
¹³C (125 MHz, CDCl_{3,} ppm) δ = 149.5, 137.5, 128.9, 128.6, 127.1, 116.5 (broad, C-B), 83.4, 24.8 .

### Example 9: Ligandless β-boration of 1-phenyl-acethylene to (E)-4,4,5,5-tetramethyl-2-styryl-1,3,2-dioxaborolane in water

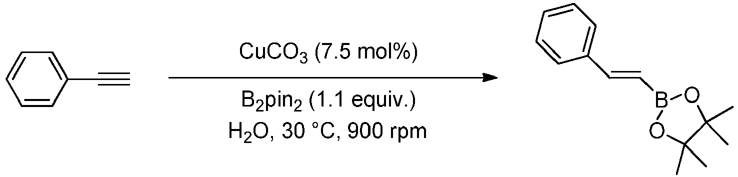

In a dry two-necked round bottom flask were placed catalyst CuCO₃ (0.075 mmol, 18.75 mg, 7.5 mol% according to starting material), 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material 1-phenyl-acethylene (1.0 mmol) was slowly added into the reaction system and such reaction mixture was intensively stirred at 30 °C for 48 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1, gradient elution) or distillation under reduced pressure to obtain 99 mg (43%, yield) of pure liquid product as determined with ¹H, ¹¹B, ¹³C NMR and MS analysis.

### Example 10: β-Boration of (E)-ethylcrotonate to ethyl 3-(4,4,5,5-tetramethyl-1,3,2-dioxaborolan-2-yl)-butanoate in water:

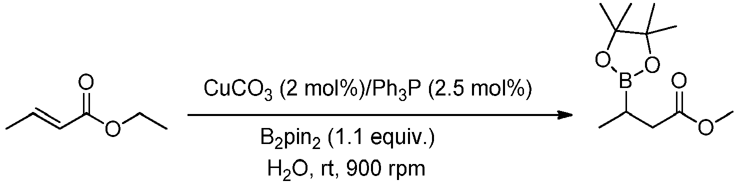

In a dry two-necked round bottom flask were placed catalyst CuCO₃ (0.02 mmol, 5.00 mg, 2 mol% according to starting material) and ligand Ph₃P (0.025 mmol, 6.5 mg, 2.5 mol% according to starting material) under the nitrogen. Afterwards 2.5 mL of deionized water was added and reaction mixture was vigorously (900 rpm) stirred at ambient temperature for 15 min. The boronating reagent bis(pinacolato)diboron (1.1 mmol, 280.0 mg, 1.1 equiv.) was added in one portion and such reaction mixture was stirred at ambient temperature for 30 min. Finally, Michael acceptor (*E*)-ethylcrotonate (1.0 mmol) was dropped into the reaction system and such reaction mixture was intensively stirred at 30 °C for 3.5 hours. The reaction mixture was diluted with brine (5 mL) and extracted with EtOAc (2 × 35 mL). Combined organic layers were again washed with brine (40 mL), dried over Na₂SO₄ and organic solvent was removed under the reduced pressure. The crude product was simply purified with flash chromatography (SiO₂; EtOAc) to obtain 223 mg (92%, yield) of liquid pure product (2) as determined with ¹H, ¹¹B, ¹³C NMR and MS analysis.
¹H NMR (500 MHz, CDCl₃, ppm) δ =4.12 (q, *J* = 7.2 Hz, 2H), 2.45 (dd, *J* = 16.2 Hz, *J* = 7.6 Hz, 1H), 2.35 (dd, *J* = 16.2 Hz, *J* = 6.7 Hz, 1H), 1.30-1.40 (m, 1H), 1.20-1.27 (m, 15H, 12H from pinacol + CH₃), 1.05 (d, *J =* 7.6 Hz, 3H);
¹¹B (160 MHz, CDCl₃, ppm) δ= 34.1 (bs);
¹³C (125 MHz, CDCl₃, ppm) δ= 173.8, 83.2, 60.2, 37.9, 25.1, 24.9, 15.3, 14.6, 13.6.

**Table 1. The effect of reaction conditions on on β-boration of (E)-ethylcrotonate in aqueous medium**

| **Entry** | **CuCO₃ (mol%)** | **Phosphine Ligand (mol%)** | **T (°C)** | **Aqueous medium** | **Conversion (%)^{b}** |
|---|---|---|---|---|---|
| 1 | CuCO₃ (15) | Ph₃P (20) | 60 | A | 100 |
| 2 | CuCO₃ (15) | Ph₃P (20) | 60 | B | 96 |
| 3 | CuCO₃ (15) | Ph₃P (20) | 25 | A | 100 |
| 4 | CuCO₃ (7.5) | Ph₃P (10) | 25 | A | 100 |
| 5 | CuCO₃ (4) | Ph₃P (5) | 25 | A | 100 |
| 6 | CuCO₃ (4) | dpff (5) | 25 | A | 100 |
| 7 | CuCO₃ (3) | dpff (3.5) | 25 | A | 100 |
| 8 | CuCO₃ (3) | Ph₃P (3.5) | 25 | B | 100 |
| 9 | CuCO₃ (2) | Ph₃P (2.5) | 30 | B | 100 (92)^{a, c} |
| 10 | CuCO₃ (7.5) | no ligand | 60 | A or B | 30 - 40 |
| 11 | no catalyst | Ph₃P (10) | 60 | A | no reaction |

| | | | | | |
|---|---|---|---|---|---|
| Reaction conditions: 1 mmol of starting material, 1.10 mmol of reagent B₂pin₂, phosphine ligand (0.025 - 0.2 mmol), CuCO₃ (0.02 - 0.2 mmol), H₂O (2.5 mL), 25 - 60 °C, 16 h, 800-900 rpm; A: reaction was performed in 2 wt% aqueous solution of TPGS surfactant (micelle-based system); B: reaction was performed in pure water; ^{a} Values in bracket refer to isolated yields after column chromatography; ^{b} Conversion was determined with ¹H NMR analysis of isolated crude product (mixture); ^{c} Reaction was completed in 3.5 hours. | | | | | |

**Table 2. Effect of different type of ligands on the efficiency/reactivity of the β-boration of a model substrate (E)-ethylcrotonate in a copper(II) carbonate catalyzed process in aqueous medium**

| **Entry** | **Ligand** | **Time (h)** | **Conversion (%)^{b}** |
|---|---|---|---|
| 1 | DPEphos | 7 | 100 |
| 2 | dppbz | 7 | 100 |
| 3 | dtpf | 7 | 100 |
| 4 | dpff | 7 | 100 |
| 5 | TMEDA | 7 | 40% |
| 6 | D-Glucose | 7 | 65% |
| 7 | Ph₃P | 7 | 100% |
| 8 | D-glucosamine | 20 | 100% |
| 9 | dppbz^{a} | 3 | 100% |

| | | | |
|---|---|---|---|
| Reaction conditions: 1 mmol of starting material, 1.10 mmol of reagent B₂pin₂, ligand (0.035 mmol), catalyst CuCO₃ (0.03 mmol), H₂O (2.5 mL), 27 °C, 3-20 h, 800-900 rpm; ^{a} 2 mol% of catalyst (dppbz) was used in this experiment; ^{b} Conversion was determined with ¹H NMR analysis of isolated crude product (mixture). | | | |

### Example 11: Ligandless β-boration of (E)-ethylcrotonate to ethyl-3-(4,4,5,5-tetramethyl-1,3,2-dioxaborolan-2-yl)-butanoate in water:

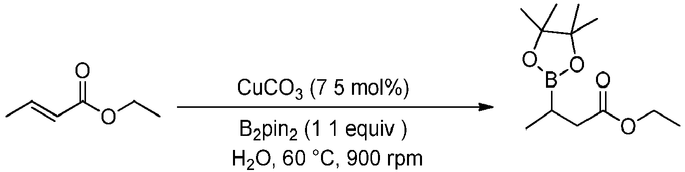

In a dry two-necked round bottom flask were placed catalyst CuCO₃ (0.075 mmol, 18.75 mg, 7.5 mol% according to starting material), 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material (*E*)-ethylcrotonate (1.0 mmol) was slowly added into the reaction system and such reaction mixture was intensively stirred at 60 °C for 24 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1, gradient elution) or distillation under reduced pressure to obtain 73 mg (30%, yield) of pure liquid product as determined with ¹H, ¹¹B, ¹³C NMR and MS analysis.
¹H NMR (500 MHz, CDCl₃, ppm) δ =4.12 (q, *J* = 7.2 Hz, 2H), 2.45 (dd, *J* = 16.2 Hz, *J* = 7.6 Hz, 1H), 2.35 (dd, *J* = 16.2 Hz, *J* = 6.7 Hz, 1H), 1.30-1.40 (m, 1H), 1.20-1.27 (m, 15H, 12H from pinacol + CH₃), 1.05 (d, *J =* 7.6 Hz, 3H);
¹¹B (160 MHz, CDCl₃, ppm) δ = 34.1 (bs);
¹³C (125 MHz, CDCl₃, ppm) δ = 173.8, 83.2, 60.2, 37.9, 25.1, 24.9, 15.3, 14.6, 13.6.

### Example 12: β-Boration of (E)-ethylcrotonate to ethyl-3-(4,4,5,5-tetramethyl-1,3,2-dioxaborolan-2-yl)-butanoate in water in the presence of D-glucose as ligand:

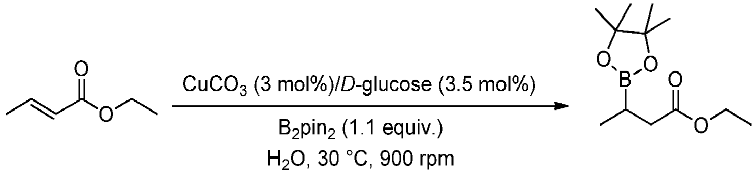

In a dry two-necked round bottom flask were placed catalyst CuCO₃ (0.03 mmol, 7.50 mg, 3 mol% according to starting material) and *O*-containing-ligand D-glucose (0.035 mmol, 3.5 mol% according to starting material) under the nitrogen. Afterwards 2.5 mL of deionized water was added and reaction mixture was vigorously (900 rpm) stirred at ambient temperature for 30 min. The boronating reagent bis(pinacolato)diboron (1.1 mmol, 280.0 mg, 1.1 equiv.) was added in one portion and such reaction mixture was stirred at ambient temperature for 45 min. Starting material (*E*)-ethylcrotonate (1.0 mmol) was slowly dropped into the reaction system and such reaction mixture was intensively stirred at 27 °C for 8 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The obtained reaction mixture was purified with flash chromatography to give 145 mg of the desired product (60%, yield) and analyzed with GC-MS analysis. The product was finally determined with ¹H and ¹¹B NMR spectroscopy.

### Example 13: β-Boration of (E)-ethylcrotonate to ethyl-3-(4,4,5,5-tetramethyl-1,3,2-dioxaborolan-2-yl)-butanoate in water in the presence of D-glucosamine as ligand:

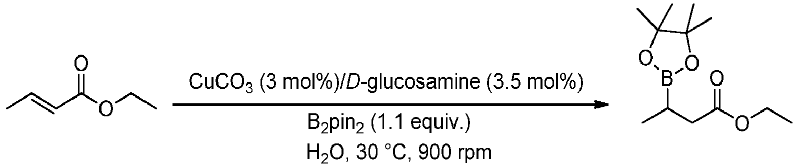

In a dry two-necked round bottom flask were placed **N,O-**containing-ligand *D*-glucosamine hydrochloride (0.035 mmol, 3.5 mol% according to starting material) which was first neutralized with aqueous solution of NaOH. Afterwards catalyst CuCO₃ (0.03 mmol, 7.50 mg, 3 mol% according to starting material) was added followed by 2.5 mL of deionized water and reaction mixture was vigorously (900 rpm) stirred at ambient temperature for 30 min. The boronating reagent bis(pinacolato)diboron (1.1 mmol, 280.0 mg, 1.1 equiv.) was added in one portion and such reaction mixture was stirred at ambient temperature for 45 min. Starting material (*E*)-ethylcrotonate (1.0 mmol) was slowly dropped into the reaction system and such reaction mixture was intensively stirred at 27 °C for 20 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1, gradient elution) to obtain 196 mg (81 %, yield) of pure liquid product as determined with ¹H and ¹¹B NMR analysis.

### Example 14: β-Boration of N,N-dimethylacrylamide to N,N-dimethyl-3-(4,4,5,5-tetramethyl-1,3,2-dioxaborolan-2-yl)-propanamide in water in the presence of D-glucosamine as ligand:

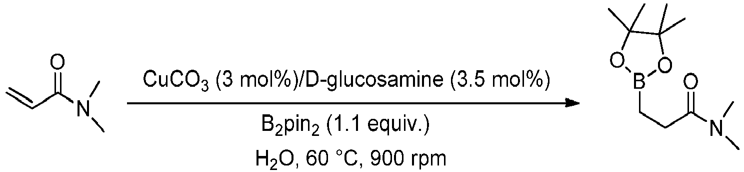

In a dry two-necked round bottom flask were placed *N,O*-containing ligand *D-*glucosamine hydrochloride (0.035 mmol, 3.5 mol% according to starting material) which was first neutralized with aqueous solution of NaOH. Afterwards catalyst CuCO₃ (0.03 mmol, 7.50 mg, 3 mol% according to starting material) was added followed by 2.5 mL of deionized water and reaction mixture was vigorously (900 rpm) stirred at ambient temperature for 30 min. The boronating reagent bis(pinacolato)diboron (1.1 mmol, 280.0 mg, 1.1 equiv.) was added in one portion and such reaction mixture was stirred at ambient temperature for 45 min. Starting material *N,N*-dimethylacrylamide (1.0 mmol) was slowly added into the reaction system and such reaction mixture was intensively stirred at 60 °C for 20 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1) to obtain 188 mg (83%, yield) of oily product as determined with ¹H, ¹¹B and ¹³C NMR analysis.
¹H NMR (500 MHz, CDCl₃, ppm) δ = 2.98 (s, 3H), 2.92 (s, 3H), 2.44 (t, *J*= 7.4 Hz, 2H), 1.15-1.23 (m, 12H), 0.90 (t, *J =* 7.4 Hz, 2H);
¹¹B (160 MHz, CDCl₃, ppm) δ = 32.3 (bs);
¹³C (125 MHz, CDCl₃, ppm) δ = 174.7, 82.6, 37.1, 35.7, 28.3, 24.7, 24.5, 24.0, 6.9;
IR (neat): v= 3440 (broad), 2977, 1604, 1372, 1330, 1147 cm⁻¹.

### Example 15: β-Boration of methyl acrylate to methyl-3-(4,4,5,5-tetramethyl-1,3,2-dioxaborolan-2-yl)-propanoate in water:

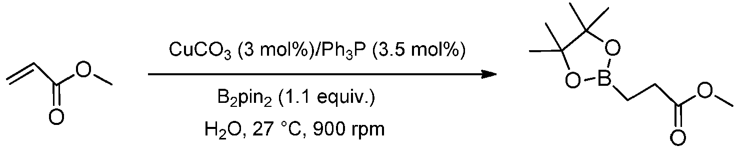

In a dry two-necked round bottom flask were placed catalyst CuCO₃ (0.03 mmol, 7.50 mg, 3 mol% according to starting material) and ligand Ph₃P (0.035 mmol, 8.8 mg, 3.5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material methyl acrylate (1.0 mmol) was slowly added into the reaction system and such reaction mixture was intensively stirred at 27 °C for 12 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1) to obtain 197 mg (92%, yield) of pure oily product as determined with ¹H, ¹¹B, ¹³C NMR and MS analysis.
¹H NMR (500 MHz, CDCl₃, ppm) δ = 3.66 (s, 3H), 2.48 (t, *J* =7.6 *H*z, 2H), 1.21 (s, 12H), 0.98 (t, *J* = 7.5 Hz, 2H);
¹¹B (160 MHz, CDCl₃, ppm) δ = 33.7 (bs);
¹³C (125 MHz, CDCl₃, ppm) δ = 175.1, 83.2, 51.5, 28.6, 24.8, 24.7, 24.5, 24.1, 6.2 (broad, C-B);

### Example 16: β-Boration of 1,1,1,3,3,3-hexafluoropropan-2-yl acrylate to 1,1,1,3,3,3-hexafluoropropan-2-yl-3-(4,4,5,5-tetramethyl-1,3,2-dioxaborolan-2-yl)propanoate in water:

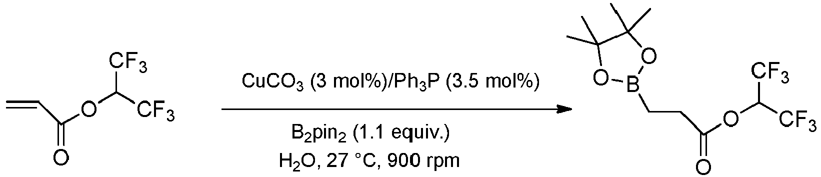

In a dry two-necked round bottom flask were placed catalyst CuCO₃ (0.03 mmol, 7.50 mg, 3 mol% according to starting material) and ligand Ph₃P (0.035 mmol, 8.8 mg, 3.5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material 1,1,1,3,3,3-hexafluoropropan-2-yl acrylate (1.0 mmol) was slowly dropped into the reaction system and such reaction mixture was intensively stirred at 27 °C for 24 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 4 : 1, gradient elution) to obtain 343 mg (82%, yield) of pure oily product as determined with ¹H, ¹¹B, ¹³C NMR and MS analysis.
¹H NMR (500 MHz, CDCl₃, ppm) δ = 5.81-5.72 (m, 1H), 2.63 (t, *J*= 7.5 Hz, 2H), 1.21 (s, 6H), 1.16 (s, 6H), 1.08 (t, *J =* 7.4 Hz, 2H);
¹¹B (160 MHz, CDCl₃, ppm) δ = 33.5 (bs);
¹⁹F (470 MHz, CDCl₃, ppm) δ= -74.4 (d, *J* = 4.7 Hz, CF₃);
¹³C (125 MHz, CDCl₃, ppm) δ = 171.5, 119.4, 117.1, 83.6, 66.4 (m), 39.3, 30.5, 28.0, 24.7, 5.7 (broad, C-B);
IR (neat): v= 2982, 2935, 1783, 1386, 1290, 1234, 1202, 1146, 1112, 692 cm⁻¹.

### Example 17: β-boration of (E)-1,5-diphenylpent-1-en-3-on to 1,5-diphenyl-1-(4,4,5,5-tetramethyl-1,3,2-dioxaborolan-2-yl)-pentan-3-on in water:

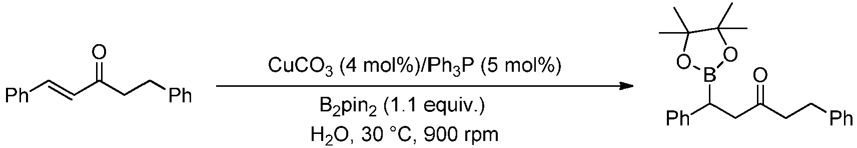

In a dry two-necked round bottom flask were placed catalyst CuCO₃ (0.04 mmol, 10.0 mg, 4 mol% according to starting material) and ligand Ph₃P (0.05 mmol, 12.5 mg, 5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material (*E*)-1,5-diphenylpent-1-en-3-on (1.0 mmol) was slowly added into the reaction system and such reaction mixture was intensively stirred at 30 °C for 30 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 9 : 1, gradient elution) to obtain 310 mg (85%, yield) of pure liquid product as determined with ¹H, ¹¹B, ¹³C NMR and MS analysis.
¹H NMR (500 MHz, CDCl₃, ppm) δ = 7.40-7.26 (m, 10H), 4.26 (m, 2H), 2.93 (m, 3H, CH₂ + CH), 2.75 (dd, *J*= 9.7 Hz, *J*= 6.3 Hz, 1H), 2.66 (dd, *J* = 16.2 Hz, *J*= 6.3 Hz, 1H), 1.22 (s, 6H), 1.15 (s, 6H);
¹¹B (160 MHz, CDCl₃, ppm) δ = 33.3 (bs);
¹³C (125 MHz, CDCl₃, ppm) δ = 173.4, 141.3, 137.9, 128.9, 128.4, 128.1, 126.5, 125.7, 83.5, 64.9, 37.2, 35.1, 27.8 (broad, C-B), 24.6, 24.5;
IR (neat): v = 2977, 1732, 1371, 1326, 1167, 1141, 700 cm⁻¹.

### Example 18: β-Boration of vinyl cinnamate to vinyl 3-phenyl-3-(4,4,5,5-tetramethyl-1,3,2-dioxaborolan-2-yl)propanoate in water:

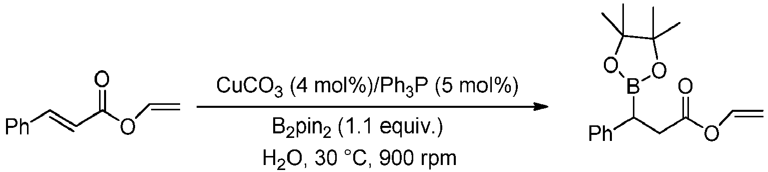

In a dry two-necked round bottom flask were placed catalyst CuCO₃ (0.04 mmol, 10.0 mg, 4 mol% according to starting material) and ligand Ph₃P (0.05 mmol, 12.5 mg, 5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material vinyl cinnamate (1.0 mmol) was slowly added into the reaction system and such reaction mixture was intensively stirred at 30 °C for 20 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with distillation under reduced pressure to obtain 275 mg (91%, yield) of pure liquid product as determined with ¹H, ¹¹B, ¹³C NMR and MS analysis.
¹H NMR (500 MHz, CDCl₃, ppm) δ = 7.32-7.16 (m, 6H, ArH + H^{a}), 4.86 (dd, *J* = 1.6 Hz, *J* = 14.0 Hz, 1H, H^{c}), 4.55 (dd, *J* =1.6 Hz, *J* = 6.3 Hz, 1H, H^{b}), 2.97 (m, 1H), 2.76 (m, 2H), 1.22 (s, 6H), 1.17 (s, 6H); ¹¹B (160 MHz, CDCl₃, ppm) δ = 33.0 (bs);
¹³C (125 MHz, CDCl₃, ppm) δ = 170.6, 141.2, 140.9, 128.6, 128.2, 97.5, 83.7, 37.0, 27.5 (broad, C-B), 24.9, 24.6, 24.5, 24.1 ;
IR (neat): v= 1755, 1646, 1371, 1317, 1143 cm⁻¹.

### Example 19: β-Boration of 1-phenyl-vinyl-sulfone to 4,4,5,5-tetramethyl-2-(2-(methylsulfonyl)ethyl)-1,3,2-dioxoborolane in water:

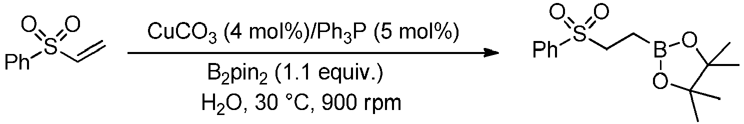

In a dry two-necked round bottom flask were placed catalyst CuCO₃ (0.04 mmol, 10.0 mg, 4 mol% according to starting material) and ligand Ph₃P (0.05 mmol, 12.5 mg, 5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material 1-phenyl-vinyl-sulfone (1.0 mmol) was slowly added into the reaction system and such reaction mixture was intensively stirred at 30 °C for 24 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; *n*-hexane : EtOAc = 9 : 1) to obtain 144 mg (86%, yield) of solid product as determined with ¹H, ¹¹B, ¹³C NMR and MS analysis.
¹H NMR (500 MHz, CDCl₃, ppm) δ = 7.92-7.86 (m, 2H), 7.71-7.60 (m, 1H), 7.57-7.51 (m, 2H), 3.18 (m, 2H), 1.1.30-1.11 (m, 14H, 12H from pinacol + CH₂);
¹¹B (160 MHz, CDCl₃, ppm) δ = 33.0 (bs);
¹³C (125 MHz, CDCl₃, ppm) δ = 138.6, 133.5, 129.1, 129.2, 83.8, 51.9, 24.7, 4.7 (broad, C-B);
IR (KBr): v = 1368, 1330, 1312, 1255, 1145, 1085 cm⁻¹.

### Example 20: β-Boration of vinyl methylacrylate to vinyl-2-methyl-3-(4,4,5,5-tetramethyl-1,3,2-dioxaborolan-2-yl)propanoate in water:

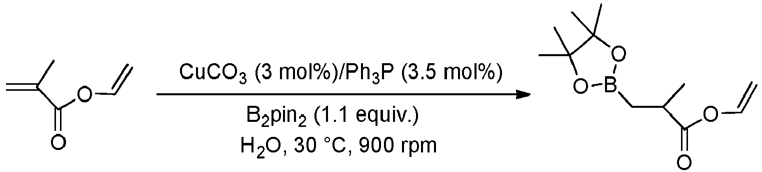

In a dry two-necked round bottom flask were placed catalyst CuCO₃ (0.03 mmol, 7.50 mg, 3 mol% according to starting material) and ligand Ph₃P (0.035 mmol, 8.8 mg, 3.5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material vinyl methylacrylate (1.0 mmol) was slowly added into the reaction system and such reaction mixture was intensively stirred at 30 °C for 20 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; *n*-hexane : EtOAc = 9 : 1, gradient elution) to obtain 226 mg (94%, yield) of pure liquid product as determined with ¹H, ¹¹B, ¹³C NMR and MS analysis.
¹H NMR (500 MHz, CDCl₃, ppm) δ = 7.26 (dd, *J* = 14.0 Hz, *J* = 6.3 Hz, 1H), 4.85 (dd, *J* = 14.0 Hz, *J* = 1.5 Hz, 1 H), 4.52 (dd, *J* = 6.3 Hz, *J*= 1.5 Hz, 1H), 2.68-2.79 (m, 1H), 1.24 (d, 3H), 1.21 (s, 6H), 1.18 (s, 6H), 1.15 (dd, *J* = 16.0 Hz, *J =* 7.4 Hz, 1H), 0.97 (dd, *J =* 16.0 Hz, *J* = 7.5 Hz, 1H); );
¹¹B (160 MHz, CDCl₃, ppm) δ = 33.3 (bs);
¹³C (125 MHz, CDCl₃, ppm) δ = 174.3, 141.5, 97.2, 83.2, 35.2, 24.8, 24.7, 19.0, 15.8 (broad, C-B);
IR (neat): v= 2979, 2935, 1753, 1646, 1372, 1322, 1143 cm⁻¹.

### Example 21: β-Boration of 3-methylenedihydrofuran-2(3H)-one to 3-((4,4,5,5-tetramethyl-1,3,2-dioxaborolan-2-yl)methyl)dihidrofuran-2(3H)-one in water:

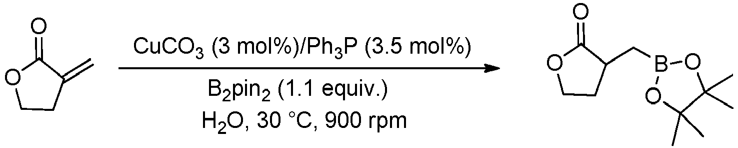

In a dry two-necked round bottom flask were placed catalyst CuCO₃ (0.03 mmol, 7.50 mg, 3 mol% according to starting material) and ligand Ph₃P (0.035 mmol, 8.8 mg, 3.5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material 3-methylenedihydrofuran-2(3*H*)-one (1.0 mmol) was slowly added into the reaction system and such reaction mixture was intensively stirred at 30 °C for 24 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; n-hexane : EtOAc = 4 : 1, gradient elution) to obtain 210 mg (93%, yield) of pure liquid product as determined with ¹H, ¹¹B, ¹³C NMR and MS analysis.
¹H NMR (500 MHz, CDCl₃, ppm) δ = 4.31 (ddd, *J*= 2.2 Hz, *J*= 8.8 Hz, *J*= 10.9 Hz, 1H), 4.16 (ddd, *J*= 6.5 Hz, *J* = 8.9 Hz, *J* = 10.4 Hz, 1H), 2.77-2.61 (m, 1H), 2.47-2.32 (m, 1H), 2.95-2.83 (m, 1H), 1.26-1.15 (m, 13H), 0.98 (dd, *J*= 8.4 Hz, *J*= 16.4 Hz, 1H);
¹¹B (160 MHz, CDCl₃, ppm) δ = 33.3 (bs);
¹³C (125 MHz, CDCl₃, ppm) δ = 179.9, 83.6, 66.4, 35.8, 30.7, 24.8, 12.5 (C-B, broad);
IR (neat): v = 2978. 2929, 1773, 1371, 1325, 1141, 1022 cm⁻¹.

### Example 22: β-Boration of 3-methylcyclohex-2-enone to 3-methyl-3-(4,4,5,5-tetramethyl-1,3,2-dioxaborolan-2-yl)-cyclohexanone in water:

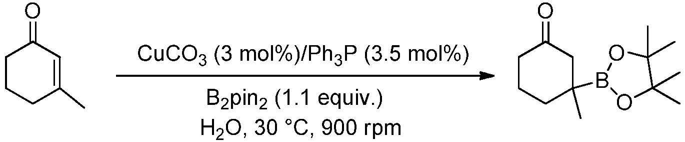

In a dry two-necked round bottom flask were placed catalyst CuCO₃ (0.03 mmol, 7.50 mg, 3 mol% according to starting material) and ligand Ph₃P (0.035 mmol, 8.8 mg, 3.5 mol% according to starting material) under the nitrogen. Afterwards 2.5 mL of deionized water was added and reaction mixture was vigorously (900 rpm) stirred at ambient temperature for 20 min. The boronating reagent bis(pinacolato)diboron (1.1 mmol, 280.0 mg, 1.1 equiv.) was added in one portion and such reaction mixture was stirred at ambient temperature for 30 min. Starting material 3-methylcyclohex-2-enone (1.0 mmol) was slowly added into the reaction system and such reaction mixture was intensively stirred at 27 °C for 10 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was purified with column chromatography (SiO₂; *n*-hexane : EtOAc = 9 : 1, gradient elution) to obtain 219 mg (92%, yield) of pure liquid product as determined with ¹H, ¹¹B, ¹³C NMR and MS analysis.
¹H NMR (500 MHz, CDCl₃, ppm) δ = 2.50 (m, 1H), 2.35 (m, 1H), 2.20 (m, 2H), 1.90-2.20 (m, 3H), 1.71-1.82 (m, 1H), 1.15-1.30 (m, 12H), 1.05 (s, 3H);
¹¹B (160 MHz, CDCl₃, ppm) δ = 34.1 (bs);
¹³C (125 MHz, CDCl₃, ppm) δ = 212.0, 83.4, 51.0, 41.1, 34.4, 25.1, 24.9, 24.6, 24.2.

### Example 23: Copper salt mediated β-boration of (E)-ethylcrotonate to ethyl-3-(4,4,5,5-tetramethyl-1,3,2-dioxaborolan-2-yl)-butanoate in aqueous medium:

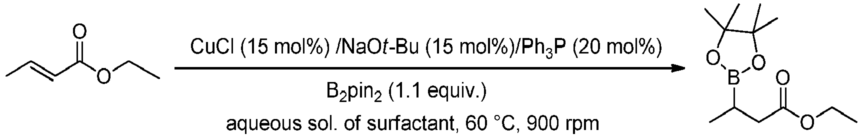

In a dry two-necked round bottom flask were placed catalyst CuCl (0.15 mmol, 15 mol% according to starting material) and base activator NaO*t*-Bu (0.15 mmol, 15 mol% according to starting material) under the nitrogen. Afterwards 5 mL of aqueous solution of surfactant (2 wt% of TPGS or SDS or Triton X-100) was added and reaction mixture was vigorously (900 rpm) stirred at ambient temperature for 15 min. Phosphine ligand Ph₃P (0.2 mmol, 20 mol%) was added, mixture was stirred for 15 min and then the boronating reagent bis(pinacolato)diboron (1.1 mmol, 280.0 mg, 1.1 equiv.) was poured into the system in one portion. Such reaction mixture was stirred at ambient temperature for 30 min. Starting material (*E*)-ethylcrotonate (1.0 mmol) was slowly dropped into the reaction system and such reaction mixture was intensively stirred at 60 °C for 20 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The obtained mixture was analyzed with ¹H NMR and 65% conversion of starting material to borolane product was established. The crude product was then purified with column chromatography (SiO₂; n-hexane : EtOAc = 9 : 1, gradient elution) to obtain 48 mg (42%, yield) of pure liquid product as determined with ¹H, ¹¹B, ¹³C NMR and MS analysis.

### Example 24: Asymmetric β-boration of (E)-methyl 4-(2,4,5-trifluorophenyl)but-2-enoate to optical active methyl-3-(4,4,5,5-tetramethyl-1,3,2-dioxaborolan-2-yl)-4-(2,4,5-trifluorophenyl)butanoate in water

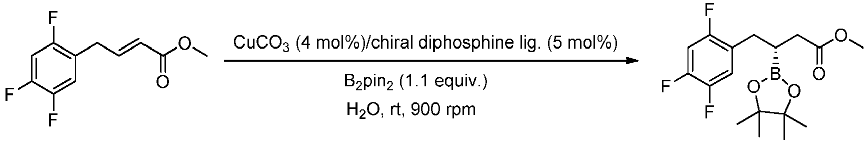

In a two-necked dry round bottom flask were placed CuCO₃ (0.02 mmol, 5.00 mg, 4 mol% according to starting material) and chiral ligand diphenylphosphino-phenyl-ferrocenyl-ethylbis[3,5-bis-trifluoromethyl)phenyl]phosphine (5 mol%, 0.025 mmol, 23.0 mg) under the nitrogen. Afterwards 2.5 mL of deionized water was added and the reaction mixture was vigorously (900 rpm) stirred at ambient temperature for 20 min. Than the boronating reagent bis(pinacolato)diboron (0.55 mmol, 140 mg, 1.10 equiv.) was added in one portion into the reaction system and stirred for an hour. Finally,α,β-unsaturated ester (*E*)-methyl-4-(2,4,5-trifluorophenyl)-but-2-enoate (0.5 mmol, 115.0 mg) was slowly dropped into the reaction system and such reaction mixture was intensively stirred at ambient temperature for 20 hours. The reaction mixture was diluted with brine (5 mL) and extracted with EtOAc (2 × 40 mL). Combined organic layers were again washed with brine (30 mL), dried over Na₂SO₄ and organic solvent was removed under the reduced pressure. The crude product was simply purified with flash chromatography (SiO₂; EtOAc) to obtain 155 mg (84% yield) of liquid pure product as determined with ¹H, ¹¹B, ¹³C NMR. HPLC chiral analysis of the obtained product showed an ee (95%).
¹H NMR (500 MHz, CDCl₃, ppm) 7.01-7.05 (m, 1H), 6.80-6.86 (m, 1H), 3.65 (s, 3H), 2.75 (dd, *J* = 15 Hz, *J* = 5.0 Hz, 1H), 2.61 (dd, *J* = 15 Hz, *J* = 5.0 Hz, 1H), 2.37 (d, *J* = 10.1 Hz, 2H), 1.60 (pentet, 1H), 1.20 (m, 12H);
¹¹B (160 MHz, CDCl₃, ppm) δ 33.6 (bs);
¹³C NMR (125 MHz, CDCl₃, ppm) δ 173.7, 156.0 (dd, *J* = 242.5 Hz, *J* = 2.5 Hz), 149.4 (m), 147.3 (m), 124.5 (m), 118.5 (dd, *J* = 20.2 Hz, *J* = 6.3 Hz), 105.0 (dd, *J* = 28.8 Hz, *J* = 21.3 Hz), 83.4, 53.3, 34.4, 28.4, 24.5.

## Claims

1. A process for preparation of a compound of formula II, 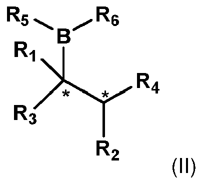 wherein R₁, R₃ and R₄ are independently from each other selected from the group consisting of
(i) hydrogen (H),
(ii) substituted or unsubstituted C1-C12 alkyl,
(iii) substituted or unsubstituted C6-C24 aryl,
(iv) substituted or unsubstituted C7-C24 alkylaryl,
R₂ is independently selected from the group consisting of
(i') substituted or unsubstituted C1-C12 alkyl,
(ii') substituted or unsubstituted C6-C24 aryl,
(iii') substituted or unsubstituted C7-C24 alkylaryl,
(iv') formyl (-CO-H),
(v') oxoalkyl, oxoaryl, oxoalkylaryl (-CO-alkyl, -CO-aryl, -CO-alkylaryl), wherein alkyl, aryl and alkylaryl are defined as in items (i'), (ii') and (iii') above,
(vi') alkyloxycarbonyl (-CO-O-alkyl), aryloxycarbonyl (-CO-O-aryl), alkylaryloxycarbonyl (-CO-O-alkylaryl) or vinyloxycarbonyl (-CO-O-CH=CH₂), wherein alkyl, aryl and alkylaryl are defined as in items (i'), (ii') and (iii') above,
(vii') *N*-unsubstituted carbamoyl (-CO-NH₂) or *N*-substituted carbamoyl (-CO-NR'R") in which R' and R" independently from each other represent alkyl, aryl or alkylaryl as defined as in items (i'), (ii') and (iii') above,
(viii') cyano (-CN),
(ix') alkylsulfonyl (-SO₂-alkyl), arylsulfonyl (-SO₂-aryl) or alkylarylsulfonyl (-SO₂-alkylaryl), wherein alkyl, aryl and alkylaryl are defined as in items (i'), (ii') and (iii') above,
or R₂ together with either R₃ or R₄ forms a 5 to 8 membered monocyclic ring, preferably a 5 to 6 membered ring, optionally including within said monocyclic ring any one of structural characteristics (v'), (vi') and (vii'),
R₅ and R₆ are independently from each other selected from the group consisting of
(i") substituted or unsubstituted C1-C12 alkyl or alkoxy,
(ii") substituted or unsubstituted C6-C14 aryl or aryloxy,
(iii") halogeno,
or R₅ and R₆ together form a chiral or non-chiral 5 to 10, particularly 5 to 6 membered mono or bicyclic ring, wherein the ring is optionally substituted at least one position with C1-C12 alkyl and/or C6-C14 aryl;
the process comprising the steps of:
(a) providing a compound of formula I, 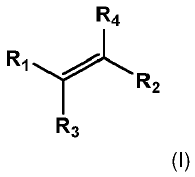 wherein R₁, R₂, R₃ and R₄ are defined as above, and
(b) reacting the compound of formula I with a boronating agent having the formula H-BR₅R₆ or R₆R₅B-B-R₅R₆ wherein R₅ and R₆ are defined as above, in the presence of water as solvent and a catalyst system comprising copper in oxidation state (I) or (II) and at least one anion selected from the group consisting of carbonate (CO₃²⁻), sulfate (SO₄²⁻), nitrate (NO₃⁻) phosphate (PO₄³⁻) , hydroxide (OH⁻) acetate (OAc⁻), *tert*-butoxide (O*t*-Bu⁻) and/or O²⁻ (oxide),
wherein the reaction mixture is free or essentially free of organic solvent(s).

2. A process for preparation of a compound of formula IV, 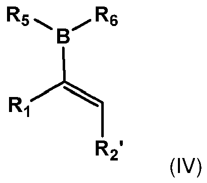 wherein R₁ is selected from the group consisting of
(i) hydrogen (H),
(ii) substituted or unsubstituted C1-C12 alkyl,
(iii) substituted or unsubstituted C6-C24 aryl ,
(iv) substituted or unsubstituted C7-C24 alkylaryl,
(v) alkyloxycarbonyl (-CO-O-alkyl) or aryloxycarbonyl (-CO-O-aryl), wherein alkyl and aryl are are defined as in items (ii) and (iii) above,
R₂' is substituted or unsubstituted C6-C24 aryl,
R₅ and R₆ are independently from each other selected from the group consisting of
(i") substituted or unsubstituted C1-C12 alkyl or alkoxy,
(ii") substituted or unsubstituted C6-C14 aryl or aryloxy,
(iii") halogeno,
or R₅ and R₆ together form a chiral or non-chiral 5 to 10, particularly 5 to 6 membered mono or bicyclic ring, wherein the ring is optionally substituted at least one position with C1-C12 alkyl and/or C6-C14 aryl;
the process comprising the steps of:
(a) providing a compound of formula III, 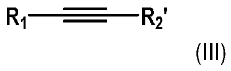 wherein R₁ and R₂' are defined as above, and
(b) reacting the compound of formula III with a boronating agent H-BR₅R₆ or R₆R₅B-B-R₅R₆, wherein R₅ and R₆ are defined as above, in the presence of water as solvent and a catalyst system comprising copper in oxidation state (I) or (II) and at least one anion selected from the group consisting of carbonate (CO₃²⁻), sulfate (SO₄²⁻), nitrate (NO₃⁻), phosphate (PO₄³⁻) , hydroxide (OH⁻) acetate (OAc⁻), *tert*-butoxide (O*t*-Bu⁻) and/or O²⁻ (oxide),
wherein the reaction mixture is free or essentially free of organic solvent(s).

3. The process according to claim 1 or 2, wherein in step (b), the catalytic system is in the form of a salt essentially consisting of a copper cation in oxidation state (I) or (II) and at least one anion selected from the group consisting of carbonate (CO₃²⁻), sulfate (SO₄²⁻), nitrate (NO₃⁻), phosphate (PO₄³⁻) , hydroxide (OH⁻) acetate (OAc⁻) and *tert*-butoxide (O*t*-Bu⁻), or the catalytic system is in the form of copper oxide in which copper has oxidation state (I) or (II) (Cu₂O or CuO); preferably the catalytic system is in the form of a salt essentially consists of a copper cation in oxidation state (I) or (II) and at least one anion selected from the group consisting of carbonate (CO₃²⁻), sulfate (SO₄²⁻), nitrate (NO₃⁻) phosphate (PO₄³⁻), hydroxide (OH⁻) acetate (OAc⁻) and *tert*-butoxide (O*t*-Bu⁻); more preferably a salt essentially consisting of copper cation in oxidation state (I) or (II) and at least one anion selected from the group consisting of carbonate (CO₃²⁻), sulfate (SO₄²⁻), nitrate (NO₃⁻) phosphate (PO₄³⁻), hydroxide (OH⁻), acetate (OAc⁻); even more preferably a salt essentially consisting of copper cation in oxidation state (II) and at least one anion selected from the group consisting of carbonate (CO₃²⁻), sulfate (SO₄²⁻), nitrate (NO₃⁻) phosphate (PO₄³⁻) , hydroxide (OH⁻) and acetate (OAc⁻); and in particular, the catalytic system is copper carbonate (CuCO₃).

4. The process according to claim 3, wherein the catalyst system is formed in situ by using a copper salt and a base, wherein the salt is preferably selected from carbonate (CO₃²⁻), sulfate (SO₄²⁻), nitrate (NO₃⁻) phosphate (PO₄³⁻) , hydroxide (OH⁻) acetate (OAc⁻) and *tert*-butoxide (O*t-*Bu⁻), and the base is preferably selected from Na₂CO₃, K₂CO₃, Cs₂CO₃ and MgCO₃.

5. The process according to any one of the preceding claims, wherein in step (b), the boronating agent is selected from the group consisting of boronic esters, alkyl boranes and alkyl-aryl boranes, preferably chiral boronic esters, chiral alkyl borane and chiral alkyl-aryl boranes; and/or the boronating agent is selected from the group consisting of bis(pinacolato)diboron, catecholborane, bis(neopentyl-glycolato)diboron, bis(hexylene-glycolato)diboron, (S)-bis(pinene)borane, (R)-bis(pinene)borane, bis(terpenoyl)borane, pinacolatoborane, bis(catecholato)diboron, disamylborane9-borabicyclo[3.3.1]nonane (9-BBN), diisopinocampheylboran (Ipc₂BH), preferably bis(pinacolato)diboron; and/or
in the compounds of formulae I and II, R₃ and R₄ are independently from each other selected from hydrogen (H) or C1-C3 alkyl, or either R₃ or R₄ together with R₂ forms a 5 to 6 membered monocyclic ring, preferably R₃ = H and R₄ = H or C1-C3 alkyl, or either R₃ or R₄ together with R₂ forms a 5 to 6 membered monocyclic ring,
more preferably R₃ = R₄ = H.

6. The process according to any one of claims 1, 3 to 5, wherein the compound of formula I is selected from the group consisting of

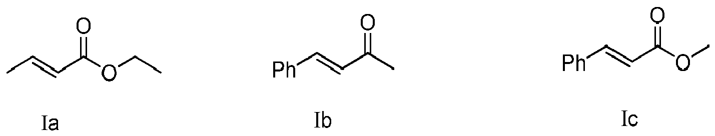

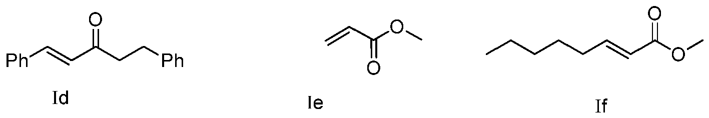

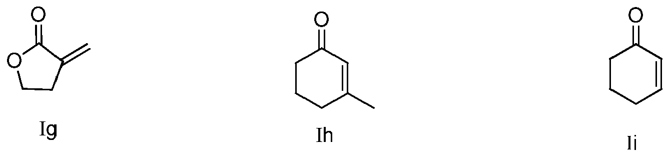

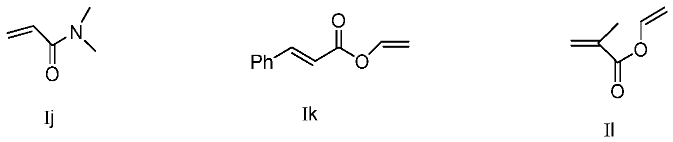

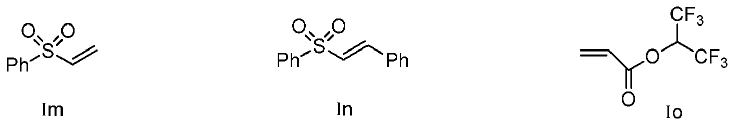

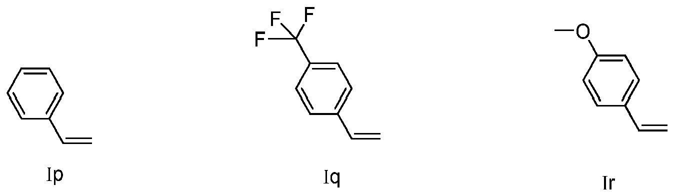

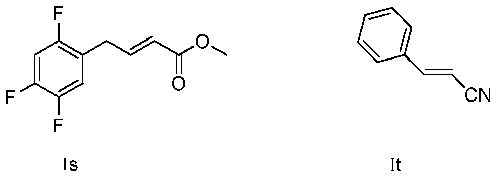

7. The process according to any one of claims 2 to 6, wherein compound of formula III is selected from the group consisting of

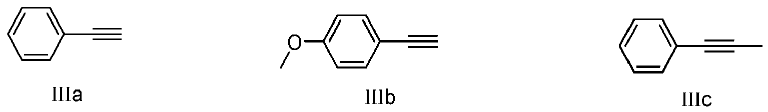

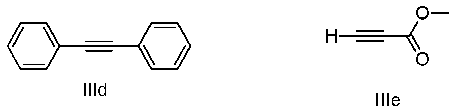

8. The process according to any one of the preceding claims, **characterized by** either one or a combination of the following features A) to J):
A) the catalytic system is present in an amount of 1-20 mol%, preferably 1.5-16 mol%, more preferably of 2-12 mol%, and even more preferably 3-8 mol% relative to the compound of formula I or compound of formula III;
B) the boronating agent is present in an amount of 1.05-1.5 equivalents, preferably of 1.1-1.3 equivalents relative to compound of formula I or compound of formula III;
C) the reaction mixture of step (b) further comprises at least one ligand, preferably the at least one ligand is present in an amount of 1-25 mol%, more preferably 1.50-18 mol%, even more preferably 20-14 mol%, yet even more preferably 2.5-12 mol%, and in particular 3-6 mol% relative to compound of formula I or compound of formula III;
D) the at least one ligand according to procedural feature C) is selected from monophosphine ligand, diphosphine ligand, *N,O*-containing ligand and *O*-containing ligand; preferably monophosphine ligand(s) is/are selected from triphenylphosphine, trimethylphosphine, tricyclohexylphosphine, tributylphosphine, tri-(*o*-tolyl)-phosphine, tri-(2-furyl)phosphine, tris(dimethylamino)-phosphine, tribenzylphosphine, tripyrolydinophosphine, tris(4-methoxyphenyl)phosphine and any combination thereof, more preferably triphenylphosphine; preferably, diphosphine ligand(s) is/are selected from 1,2-bis(diphenyl-phosphino)benzene, 1,1,-bis(di-*tert*-butylphosphino)ferrocene, (oxydi-2,1-phenylene)bis-(diphenylphosphine), and any combination thereof, more preferably 1,2-diphenylphosphinobenzene or 1,1-bis(di-*tert*-butylphosphino)ferrocene; preferably, *N,O*-containing ligand is *D*-glucosamine; preferably, *O*-containing ligand is *D-*glucose.
E) the ligand according to procedural feature C) is chiral selected from the group consisting of (*R*)-2,2'-bis(diphenylphosphino)-1,1-binaphthalene, (*S*)-2,2'-bis(diphenylphosphino)-1,1-binaphthalene, (*S,R*)-(diphenylphosphino)-ferrocenyl-ethyldi-tert-butylphosphine, (*R,*S)-(diphenylphosphino)-ferrocenyl-ethyldi-tert-butylphosphine,(*S*)-1-(*Sp*)-2-[2-(diphenylphosphino)-phenyl]-ferrocenyl-ethylbis[3,5-bis(trifluoromethyl)phenyl]phosphine, (*R*)-1-(*R*p)-2-[2-(diphenylphosphino)-phenyl]-ferrocenyl-ethylbis[3,5-bis(trifluoromethyl)phenyl]phosphine, (*S*)-4-tert-butyl-2-[(*S*p)-2-(diphenylphosphino)ferrocenyl]-2-oxazoline, (*R*)-4-tert-butyl-2-[(*S*p)-2-(diphenylphosphino)ferrocenyl]-2-oxazoline, (1 *S*,1'*S*)-1,1'-bis[bis[3,5-bis(trifluoromethyl)phenyl]phosphino]-2,2'-bis[(*S*)-dimethylamino)phenylmethyl], (1 *R,1'R)-*1,1'-bis[bis[3,5-bis(trifluoromethyl)phenyl]phosphino]-2,2'-bis[(*R*)-(dimethylamino)phenylmethyl], and any combination thereof, and is particularly (*R*)-2,2'-bis(diphenylphosphino)-1,1-binaphthalene, (*S*)-2,2'-bis(diphenylphosphino)-1,1-binaphthalene, and (*S*)-1-(*S*p)-2-[2-(diphenylphosphino)-phenyl]-ferrocenyl-ethylbis[3,5-bis(trifluoromethyl)phenyl]phosphine, (*R*)-1-(*R*p)-2-[2-(diphenylphosphino)-phenyl]-ferrocenyl-ethylbis[3,5-bis(trifluoromethyl)phenyl]phosphine;
F) step (b) is carried out without adding an additional base activator.
G) the reaction mixture of step (b) further comprises a surfactant, preferably the surfactant is selected from the group consisting of nonionic polyethyleneglycols (PEGs) comprising 7 to 30 ethelene glycol units and salts of C8-C15 fatty acids or C8-C15 alkylsulfates, preferably the surfactant is selected from the group consisting of tocopheryl polyethylene glycol succinate (TPGS), sodium dodecylsulfate (SDS) and Triton X-1 00;
H) the surfactant according to procedural feature G) is added to the reaction mixture of step (b) in an amount of 0.5 to 6 % by weight relative to the weight of the reaction mixture, preferably 2 to 3 % by weight;
I) step (b) is carried out at a temperature of 20 °C to 100 °C, preferably of 22 °C to 60 °C, more preferably 24 to 50 °C.
J) subsequent to step (b), the products in the form of compound of formula II or IV are isolated without using organic solvents, preferably by means of distillation and/or precipitation or separation from water in seperatory funnel.

9. A process according to any one of claim 1 and 3 to 8, wherein from a starting material in the form of any one of compounds of formula la to It according to claim 6, a compound of formula IIa to IIt is respectively obtained having the structural formula

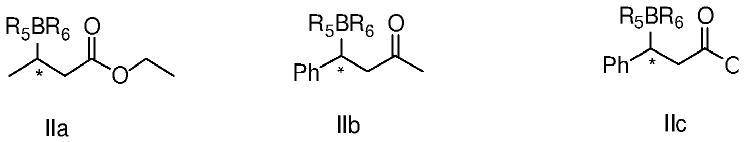

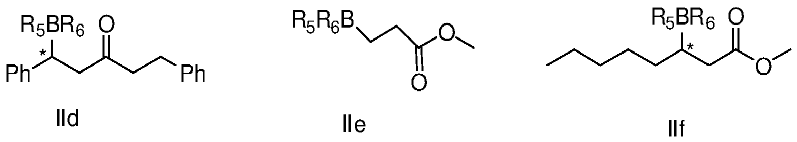

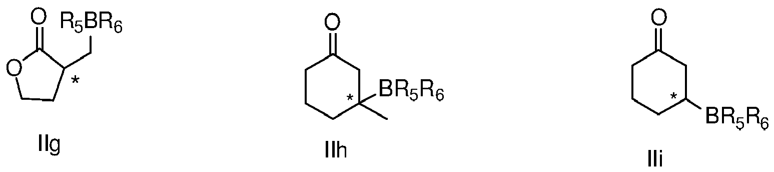

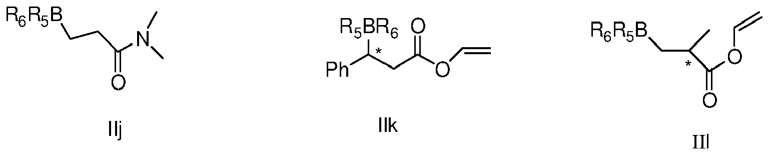

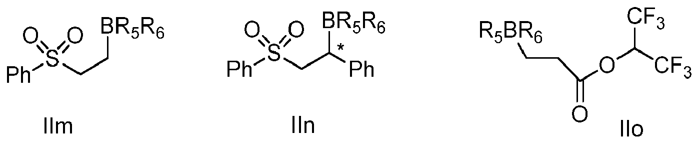

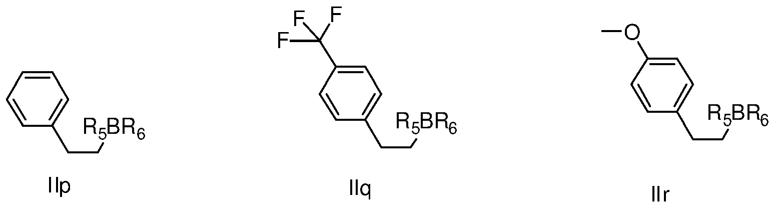

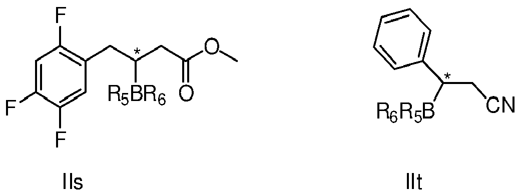

10. The process according to any one of claims 1 to 6 and 8 to 9, **characterized by** either one or a combination of the procedural features I) to III):
I) a chiral boronating agent and/or a chiral ligand is applied in order to obtain a compound of formula II having an enantiomeric excess of at least 60%, preferably an enantiomeric excess of at least 85%, more preferably the enantiomeric excess is at least 90%, even more preferably at least 95% and in particular at least 98%;
II) compounds of formula I and II are in the form of compound of formula Is as defined in claim 6 and compound of formula IIs as defined in claim 9 respectively, and the chiral ligand is as defined in procedural feature E) of claim 8;
III) the chiral boronating agent, the chiral ligand is in enantiopure or diasteriomerically pure form.

11. The process according to any one of claims 2 to 8, wherein from a starting material in the form of any one of compounds of formula IIIa to IIId according to claim 7, a compound of formula IVa to IVd is respectively obtained having the structural formula

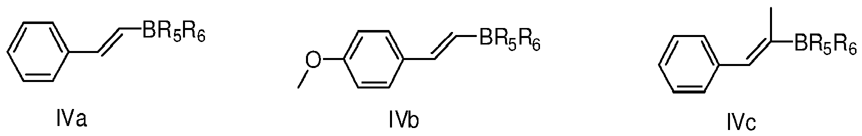

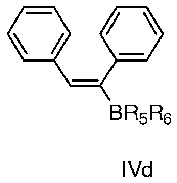

12. Use of the process for preparation of compound of formula II or the compound of formula IV according to claim 1 or 2, in the process of transformation of the C-B bond to C-O, C-N, C-S bond and C-X bond, wherein X is F, Cl, Br, I.
